# EUROPEAN PATENT APPLICATION

(11) **EP 3 950 537 A1**
(43) Date of publication of application: **09.02.2022**
(21) Application number: 20784403.6
(22) Date of filing: 04.03.2020
(51) Int. Cl.: B65G 1/00, G06Q 10/00

(54) **MAINTENANCE METHOD, MAINTENANCE SERVER, AND PROGRAM**

(30) Priority: 29.03.2019 JP 2019067893
(71) Applicant: Murata Machinery, Ltd., Kyoto-shi, Kyoto 601-8326 (JP)
(72) Inventor: TANIMOTO, Yoshifumi, Kyoto-shi, Kyoto 612-8686 (JP)
(74) Representative: Hoffmann Eitle
(86) International application number: PCT/JP2020/009040
(87) International publication number: WO 2020/202992

(57) **Abstract**

In sharing information about a facility provided at a workplace, to share information among a plurality of users in a state where the information is organized for each facility, a maintenance method executed by a maintenance server (3) for maintaining facilities in an automatic warehouse system (1) includes: a step of generating a workplace image (FM) showing the automatic warehouse system (1); a step of collecting operation information (FI) about the facility from the automatic warehouse system (1); a step of collecting maintenance information (MI) managed at a maintenance base (2) from the maintenance base (2); a step of generating a composite image (SI) by associating an object (O) indicating the facility in the workplace image (FM) with the operation information (FI) and/or the maintenance information (MI) about the facility; and a step of outputting the composite image (SI) to an operator terminal (17) used by an operator using the facility in the automatic warehouse system (1), and to a maintenance terminal (21a, 21b) used by a maintainer maintaining the facility at the maintenance base (2).

## Description

### TECHNICAL FIELD

The present invention relates to a maintenance method of maintaining a facility at a workplace, a maintenance server that is used for the maintaining work, and a program that causes a computer to execute the maintenance method. In particular, the present invention relates to a method of sharing information about a facility at a workplace among a plurality of users.

### BACKGROUND ART

Conventionally, there is known a method of sharing information among a plurality of users of terminals, and a computer system that realizes the method. For instance, there is known an electronic meeting system that can share a document managed by a predetermined server among a plurality of users of client terminals, by displaying the document on screens of the client terminals and adding information to the document (e.g. see Patent Citation 1).

### PRIOR ART CITATIONS

### PATENT CITATION

Patent Citation 1: Japanese Patent No. 6369598

### SUMMARY OF INVENTION

### TECHNICAL PROBLEM

The application of the above-mentioned technique for sharing information among a plurality of users to a workplace such as an automatic warehouse equipped with a lot of facilities is demanded. Thus, a maintainer who maintains a facility can access to information about the facility from a remote place outside the workplace, for example. In addition, a user of the facility can access to the information about the facility.

However, if a conventional information sharing system such as the above-mentioned electronic meeting system is applied to sharing of information about facilities at a workplace, information is not organized for each facilities and such disorganized information may be provided to users. This is because, while each facility has its own information at the workplace, the conventional information sharing system provides information to be shared to users without taking its purpose and/or type in consideration.

If the information is provided without organizing it for each facility despite each facility has its own information, it is difficult for the user to find desired information easily.

It is an object of the present invention, in sharing information about facilities disposed at a workplace, to share the information among a plurality of users in a state where the information is organized for each facility.

### TECHNICAL SOLUTION

A plurality of aspects as means for solving the problem are described below. These aspects can be combined arbitrarily as necessary.

A maintenance method according to an aspect of the present invention is a method executed by a maintenance server for maintaining a facility at a workplace. The maintenance method includes the following steps:
generating a workplace image showing the workplace;
receiving operation information about the facility from the workplace;
receiving maintenance information for maintaining the facility from a maintenance base outside the workplace, the maintenance information being managed at the maintenance base;
generating a composite image by associating an object indicating the facility in the workplace image with the operation information and/or the maintenance information about the facility; and
outputting the composite image to an operator terminal used by an operator using the facility at the workplace, and to a maintenance terminal used by a maintainer maintaining the facility at the maintenance base.

In the maintenance method described above, the workplace image showing the workplace is generated, and in this workplace image, the object indicating the facility at the workplace is associated with the operation information and/or the maintenance information of the corresponding facility to generate the composite image. Further, this composite image is outputted to the operator terminal (a terminal used by the user who uses the facility) and the maintenance terminal (a terminal used by the maintainer who maintains the facility).

By associating the object indicating the facility existing at the workplace with the information about the facility indicated by the object (the operation information, the maintenance information), the composite image in which the operation information and/or the maintenance information are organized for each facility can be generated.

In addition, by outputting the composite image to the operator terminal and the maintenance terminal, the operation information and/or maintenance information between the operator who uses the facility at the workplace and the maintainer who maintains the facility at the maintenance base outside the workplace can be shared, in the state where the information is organized for each facility. As a result, the operator and the maintainer can easily find the desired operation information and/or maintenance information that are shared.

The maintenance method may further include the following steps, and in this case, the composite image may be outputted to the maintenance terminal and the operator terminal that have been successfully authenticated as a result of an authentication process:
receiving authentication information from the maintenance terminal and the operator terminal; and
performing an authentication process of the maintenance terminal and the operator terminal by using the received authentication information.
In this way, it is possible to provide the composite image only to a specific user (operator and/or maintainer), and the security of the composite image can be improved.

The authentication information may include a user ID. The user ID is an ID for identifying the operator or the maintainer.

In this case, generating the composite image includes generating a composite image with an access permission by associating the object with only the operation information and/or the maintenance information that is allowed to be accessed by the operator or the maintainer who is identified with the user ID.

In addition, outputting the composite image includes outputting the composite image with the access permission to the operator terminal used by the operator having the user ID used in generating the composite image with the access permission, or to the maintenance terminal used by the maintainer having the user ID.

In this way, it is possible to set a permission of accessing to the operation information and/or maintenance information for each operator and maintainer identified by the user ID.

The composite image may have one or more icons showing that the operation information and/or the maintenance information is associated with the object.

In this case, the maintenance method further includes, when it is determined that a specific icon is selected among the one or more icons in the composite image, outputting the operation information and/or the maintenance information associated with the specific icon to the operator terminal or the maintenance terminal that has performed a selection the specific icon,.

In this way, it is possible to provide the operator and the maintainer with information that the facility (object) is associated with the operation information and/or the maintenance information, in an organized state using visual information (icon).

The maintenance method may further include the following steps:
outputting a list representing, in a form of character strings, the operation information and/or the maintenance information associated with the object in the composite image to the maintenance terminal and the operator terminal; and
performing a character string search of the list.

In this way, it is easy to perform the character string search of the operation information and/or the maintenance information associated with the object in the composite image.

The maintenance method may further include displaying a chat box for providing a chat function using the operator terminal and the maintenance terminal together with the composite image.

In this case, generating the composite image includes generating the composite image by associating the workplace image with a content of the chat performed using the chat box.

In this way, the content of the chat in the chat box can be associated with the object indicating the facility at the workplace. As a result, the content of the chat and the object can be simultaneously grasped.

The maintenance method may further include generating a link to access to a predetermined position in the composite image by designating the content of the chat associated with the workplace image.

In this way, it is possible to quickly check the predetermined position in the composite image associated with the content of the chat.

The operation information may include information generated by the operator terminal, and the maintenance information may include information generated by the maintenance terminal.

In this way, it is possible to associate the object in the workplace image with information generated by the operator using the operator terminal, and with information generated by the maintainer using the maintenance terminal.

The maintenance method may further include the following steps:
when receiving new operation information and/or maintenance information after the composite image is provided, generating a new composite image by associating received new information with a corresponding object in the composite image; and
outputting the new composite image to the operator terminal and the maintenance terminal.

In this way, it is possible to generate a latest composite image by associating latest information with the object in the workplace image, and to provide the latest composite image to the operator terminal and the maintenance terminal.

The maintenance method may further include, when the new composite image is generated, notifying the operator terminal and the maintenance terminal that the composite image is updated.

In this way, the operator who uses the operator terminal and the maintainer who uses the maintenance terminal can easily recognize that the new composite image (the latest composite image) is generated, i.e., the composite image is updated.

A maintenance server according to another aspect of the present invention is a server for maintaining a facility at a workplace. The maintenance server includes a control unit.

The control unit is configured to generate a workplace image showing a workplace, receive operation information about the facility from the workplace, and receive maintenance information from a maintenance base. The maintenance information is information for maintaining the facility managed at the maintenance base outside the workplace.

In addition, the control unit is configured to generate a composite image by associating an object indicating the facility in the workplace image with the operation information and/or the maintenance information about the facility, and output the composite image to an operator terminal and a maintenance terminal.

The operator terminal is a terminal used by an operator who uses the facility at the workplace. The maintenance terminal is a terminal used by a maintainer who maintains the facility at the maintenance base.

In the maintenance server, the control unit is configured to generate the workplace image indicating the workplace, and generate the composite image by associating the object indicating the facility at the workplace in the workplace image with the operation information and/or the maintenance information of the corresponding facility. Further, this composite image is outputted to the operator terminal and the maintenance terminal.

By associating the object indicating the facility existing at the workplace with the information about the facility indicated by the object (the operation information, the maintenance information), the composite image in which the operation information and/or the maintenance information are organized for each facility can be generated.

In addition, by outputting the composite image to the operator terminal and the maintenance terminal, the operation information and/or the maintenance information between the operator who uses the facility at the workplace and the maintainer who maintains the facility at the maintenance base outside the workplace can be shared, in the state where the information is organized for each facility. As a result, the operator and the maintainer can easily find desired operation information and/or maintenance information that are shared.

The control unit may be configured to receive authentication information from the maintenance terminal and the operator terminal, and perform an authentication process of the maintenance terminal and the operator terminal by using the received authentication information. In addition, the control unit may be configured to output the composite image to the maintenance terminal and the operator terminal that has succeeded in authentication as a result of the authentication process.

In this way, it is possible to provide the composite image only to a specific user (operator and/or maintainer), and the security of the composite image can be improved.

The authentication information may include a user ID. The user ID is an ID for identifying the operator and the maintainer.

In this case, the control unit is configured to generates a composite image with an access permission by associating the object with only the operation information and/or the maintenance information that is allowed to be accessed by the operator or the maintainer identified by the user ID.

In addition, the control unit is configured to output the composite image with the access permission to the operator terminal used by the operator having the user ID used in generating the composite image with the access permission, or to the maintenance terminal used by the maintainer having the user ID.

In this way, it is possible to set a permission of accessing the operation information and/or maintenance information for each operator and each maintainer identified by the user ID.

The composite image may have one or more icons showing that the operation information and/or the maintenance information is associated with the object.

In this case, when determining that a specific icon is selected among the one or more icons in the composite image, the control unit is configured to output the operation information and/or the maintenance information associated with the specific icon to the operator terminal or the maintenance terminal that has performed a selection of the specific icon.

In this way, it is possible to provide the operator and the maintainer with information that the facility (object) is associated with the operation information and/or the maintenance information, in an organized state using visual information (icon).

The control unit may be configured to output a list representing, in a form of character strings, the operation information and/or the maintenance information associated with the object in the composite image to the maintenance terminal and the operator terminal, and perform a character string search of the list.

In this way, it is easy to perform the character string search of the operation information and the maintenance information associated with the object in the composite image.

The control unit may be configured to display a chat box for providing a chat function using the operator terminal and the maintenance terminal, together with the composite image. In this case, the control unit is configured to generate the composite image by associating the workplace image with a content of the chat performed using the chat box.

In this way, it is possible to associate the content of the chat in the chat box with the object indicating the facility at the workplace. As a result, the content of the chat and the object can be simultaneously grasped.

The control unit may be configured to generate a link to access to a predetermined position in the composite image by designating the content of the chat associated with the workplace image.

In this way, it is possible to quickly check a predetermined position in the composite image associated with the content of the chat.

The operation information may include information generated by the operator terminal, and the maintenance information may include information generated by the maintenance terminal.

In this way, it is possible to associate the object in the workplace image with information generated by the operator using the operator terminal, and with information generated by the maintainer using the maintenance terminal.

When receiving new operation information and/or maintenance information after the composite image is provided, the control unit may be configured to generate a new composite image by associating received new information with the corresponding object in the composite image. In addition, the control unit may be configured to output the new composite image to the operator terminal and the maintenance terminal.

In this way, it is possible to generate a latest composite image by associating latest information with the object in the workplace image, and to provide the latest composite image to the operator terminal (the operator) and the maintenance terminal (the maintainer).

When generating the new composite image, the control unit may be configured to notify the operator terminal and the maintenance terminal that the composite image is updated.

In this way, the operator who uses the operator terminal and the maintainer who uses the maintenance terminal can easily recognize that the new composite image (the latest composite image) is generated, i.e., the composite image is updated.

A program according to still another aspect of the present invention is a program that causes a computer to execute the maintenance method described above.

### ADVANTAGEOUS EFFECTS

In the case of sharing information for maintaining the facility at the workplace, by generating the composite image in which the operation information and/or the maintenance information are organized and associated for each facility, it is possible to share the operation information and/or the maintenance information between the operator using the facility at the workplace and the maintainer maintaining the facility at the maintenance base outside the workplace, in the organized state for each facility.

### BRIEF DESCRIPTION OF DRAWINGS

Fig. 1 is a diagram illustrating an example of an overall structure of a communication system.
Fig. 2 is a diagram illustrating an example of a structure of an automatic warehouse system.
Fig. 3 is a diagram illustrating an example of image data.
Fig. 4 is a diagram illustrating an example of measurement data using a sensor.
Fig. 5 is a diagram illustrating an example of a structure of a maintenance base.
Fig. 6 is a diagram illustrating an example of maintenance information (Part 1).
Fig. 7 is a diagram illustrating an example of maintenance information (Part 2).
Fig. 8 is a diagram illustrating an example of a hardware structure of a maintenance server.
Fig. 9 is a flowchart illustrating a schematic operation of the maintenance server.
Fig. 10 is a flowchart illustrating an initial setting operation in the maintenance server.
Fig. 11 is a diagram illustrating transmission and reception of information in operations until the output of the composite image.
Fig. 12 is a flowchart illustrating an operation of the maintenance server in the operations until the output of the composite image.
Fig. 13 is a diagram illustrating an example of a login screen.
Fig. 14 is a flowchart illustrating a generating process of a composite image.
Fig. 15 is a diagram illustrating transmission and reception of information in an information providing operation.
Fig. 16 is a flowchart illustrating an operation of the maintenance server in the information providing operation.
Fig. 17 is a diagram illustrating an example of a screen shared between an operator terminal and a maintenance terminal.
Fig. 18 is a diagram illustrating an example of editing shared information.
Fig. 19 is a flowchart illustrating an operation of the maintenance server when the information is changed.
Fig. 20 is a diagram illustrating an example of notification that the composite image is updated.
Fig. 21 is a diagram illustrating an example of an initial screen.
Fig. 22 is a diagram illustrating an example of the composite image.
Fig. 23 is a diagram illustrating an example of a display screen in which the composite image and a chat box are simultaneously displayed.
Fig. 24 is a diagram illustrating an example of a selection screen displaying a character string list.
Fig. 25 is a diagram illustrating an example of a selection screen displaying a thumbnail list.

### DESCRIPTION OF EMBODIMENTS

### 1. First Embodiment

### (1) Overall Structure of Communication System

A maintenance server for maintaining a facility at a workplace according to the present invention is described below. The maintenance server is a server that is configured to share information about facilities between the workplace and a maintenance base at a place apart from the workplace. Therefore, the maintenance server is disposed in a communication system including the facilities and a terminal at the workplace and a terminal at the maintenance base.

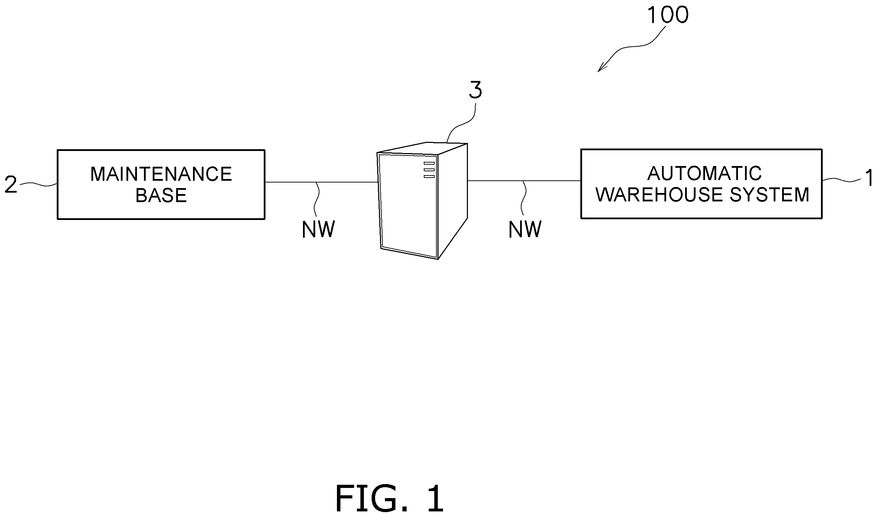

With reference to Fig. 1, as an example of the communication system described above, a communication system 100 according to a first embodiment is described below. Fig. 1 is a diagram illustrating an example of an overall structure of the communication system.

The communication system 100 according to the first embodiment includes an automatic warehouse system 1 as an example of the workplace, a maintenance base 2, and a maintenance server 3.

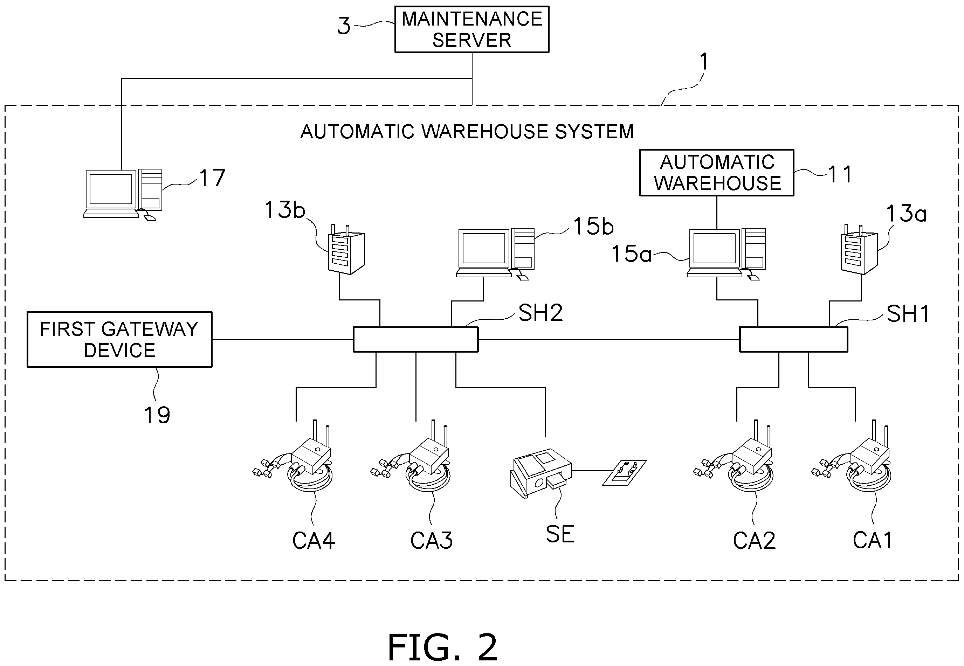

The automatic warehouse system 1 is disposed, for example, in a distribution center, and a system in which goods are loaded and unloaded. The automatic warehouse system 1 includes an automatic warehouse 11 (see Fig. 2) in which goods are loaded or unloaded (one example of a facility).

The maintenance base 2 is a base at which a maintainer resides to perform maintenance and the like of the automatic warehouse 11 in the automatic warehouse system 1, for example, and it is equipped with terminals (maintenance terminals 21a and 21b) for maintaining the automatic warehouse system 1.

The maintenance server 3 is connected to the automatic warehouse system 1 and (a gateway of) the maintenance base 2 via a network NW (e.g. a WAN or the like). The maintenance server 3 stores a database that stores information about (facilities of) the automatic warehouse 11 (called operation information) stored at the automatic warehouse system 1, and information used for maintaining the facilities managed at the maintenance base 2 (called maintenance information).

In addition, the maintenance server 3 provides the stored operation information and/or maintenance information to an operator terminal used by an operator who uses the automatic warehouse 11 in the automatic warehouse system 1, and to the maintenance terminal 21a, 21b used by the maintainer at the maintenance base 2.

In this way, in the communication system 100, the operation information and the maintenance information can be shared between the operator terminal and the maintenance terminal 21a, 21b via the maintenance server 3.

It should be noted that, in the communication system 100 according to this embodiment, transmission and reception of a command or the like between the maintenance server 3 and each device described later (the gateway device, or a camera or a sensor in the automatic warehouse system 1) is performed using a WebSocket protocol, for example.

In addition, there are only one automatic warehouse system 1 and one maintenance base 2 in the communication system 100 illustrated in Fig. 1, but this is not a limitation. There may be a plurality of automatic warehouse systems 1 and/or maintenance bases 2 in the communication system 100. For instance, a plurality of automatic warehouse systems 1 can be maintained at one maintenance base 2, or one automatic warehouse system 1 can be maintained at a plurality of maintenance bases 2.

### (2) Automatic Warehouse System

### (2-1) Automatic Warehouse

Hereinafter, a specific structure of the automatic warehouse system 1 included in the communication system 100 is described with reference to Fig. 2. Fig. 2 is a diagram illustrating a structure of the automatic warehouse system.

The automatic warehouse system 1 includes the automatic warehouse 11. The automatic warehouse 11 includes a rack, a stacker crane, a conveyor, and the like, to perform loading and unloading, transfer, storage, and the like of goods.

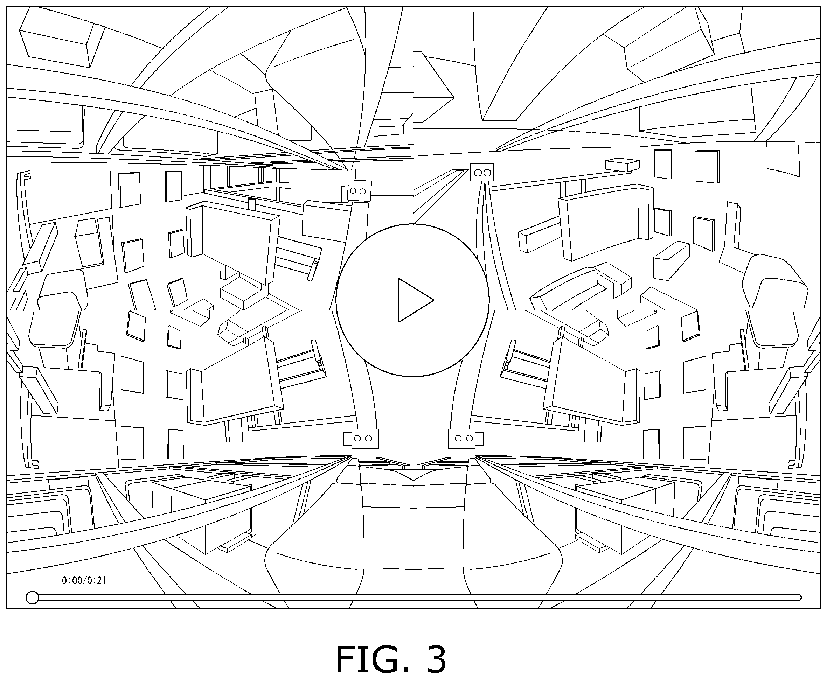

In this embodiment, the stacker crane and the conveyor of the automatic warehouse 11 are equipped with cameras CA1 to CA4 that are configured to take still images and movies of a predetermined time length, for example, and visual operation information FI indicating statuses of the stacker crane and the conveyor can be acquired. The camera CA1 to CA4 is a fish-eye lens camera, for example. Using the camera CA1 to CA4, the operation information FI can be obtained that is the image data (movie) as illustrated in Fig. 3, for example. Fig. 3 is a diagram illustrating an example of the image data.

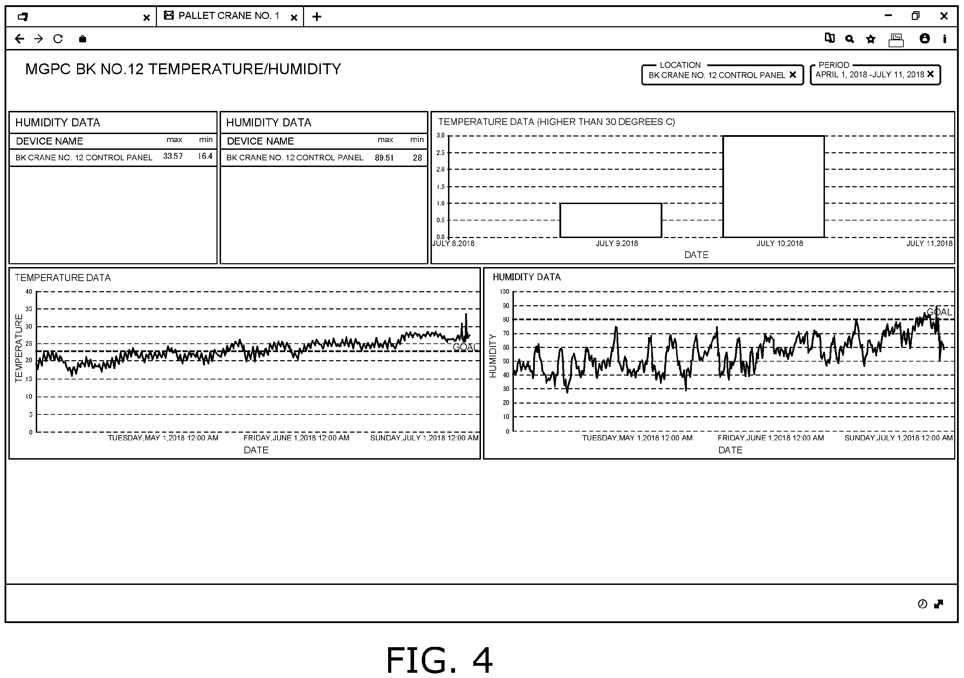

In addition, a sensor SE (e.g. a temperature and humidity sensor) that is configured to measure ambient temperature and humidity is disposed in a vicinity of the automatic warehouse 11, and ambient temperature and humidity can be acquired as the operation information FI. Using the sensor SE, the measurement data (operation information FI) that is data displayed as a line graph or a bar graph of the measured temperature and humidity as illustrated in Fig. 4, can be obtained, for example. Fig. 4 is a diagram illustrating an example of the measurement data using the sensor.

Further, the stacker crane is equipped with a sensor SE that is configured to measure a predetermined physical quantity, and the operation information FI can be measured that is a level of vibration and/or sound generated due to a load shift or the like when the load shift or the like occurs in the stacker crane. As such sensor SE, an acceleration sensor, a sound sensor, or the like can be used, for example.

It should be noted that four cameras CA1 to CA4 and one sensor SE are installed in the automatic warehouse system 1 illustrated in Fig. 2, but the numbers of the cameras and the sensors installed in the automatic warehouse 11 are not limited to those described above, but can be any numbers in accordance with a size or the like of the automatic warehouse system 1.

### (2-2) Network Structure of Automatic Warehouse System

With reference to Fig. 2, the network structure in which individual devices can communicate with each other in the automatic warehouse system 1 is further described.

The network structure of the automatic warehouse system 1 includes a first switching hub SH1. The first switching hub SH1 is connected with the cameras CA1 and CA2 and a first external storage device 13a as illustrated in Fig. 2. The first external storage device 13a is a network attached storage (NAS) device which stores the image data acquired by the camera CA1, CA2, for example.

The network structure of the automatic warehouse system 1 includes a second switching hub SH2. The second switching hub SH2 is connected with the cameras CA3 and CA4, the sensor SE, and a second external storage device 13b. The second external storage device 13b is a NAS device, for example, and stores image data acquired by the camera CA3, CA4, and measurement data acquired by the sensor SE.

The second switching hub SH2 is connected also with the first switching hub SH1, and the image data acquired by the camera CA1, CA2 can be stored also in the second external storage device 13b, while the image data acquired by the camera CA3, CA4, and the date acquired by the sensor SE can be stored also in the first external storage device 13a.

The network structure of the automatic warehouse system 1 includes a server that is configured manage the automatic warehouse system 1. Specifically, it includes a conveyance management server 15a and an information management server 15b.

The conveyance management server 15a is a computer system including a CPU, a storage device (such as a RAM, a ROM, an SSD, a hard disk, or the like), and various interfaces such as a network interface. The conveyance management server 15a can communicate with the stacker crane, the conveyor, and the like in the automatic warehouse 11, and controls the stacker crane and the conveyor to control and manage loading and unloading of goods in the automatic warehouse 11.

It should be noted that, in this embodiment, the conveyance management server 15a is connected with the first switching hub SH1.

The information management server 15b is a computer system including a CPU, a storage device (such as a RAM, a ROM, an SSD, a hard disk, or the like), and various interfaces such as a network interface. The information management server 15b manages various data (such as data acquired by the cameras CA1 to CA4 and the sensor SE) stored in the first external storage device 13a and the second external storage device 13b. The information management server 15b acquires the information managed by the conveyance management server 15a, as necessary.

It should be noted that, in this embodiment, the information management server 15b is connected to the second switching hub SH2.

The network structure of the automatic warehouse system 1 includes an operator terminal 17. The operator terminal 17 is a personal computer, a tablet terminal, or the like, for example. The operator terminal 17 is a terminal used by an operator who works in the automatic warehouse 11, and can communicate with the maintenance server 3 via the network NW In this way, the operator can access to the operation information FI and maintenance information MI stored in the maintenance server 3, by using the operator terminal 17. In the case where the operator terminal 17 is a tablet terminal, the operator can perform a maintenance of the device, with taking the operator terminal 17 to an installation location of the device to be maintained (the automatic warehouse, the camera, or the sensor), . In addition, also in the case where the operator terminal 17 is a terminal (such as a personal computer) other than a tablet terminal, the operator terminal 17 may access the camera CA1 to CA4, the sensor SE, or the like.

It should be noted that only one operator terminal 17 is installed in the automatic warehouse system 1 illustrated in Fig. 2, but this is not a limitation. A plurality of the operator terminals 17 may be installed.

The network structure of the automatic warehouse system 1 includes a first gateway device 19. The first gateway device 19 is a computer system including a CPU, a storage device (such as a RAM, a ROM, an SSD, a hard disk, or the like), and various interfaces such as a network interface. In addition, the first gateway device 19 may be hardware implementing a part or a whole of its functions using an SoC or the like.

The first gateway device 19 is connected with the second switching hub SH2 and an external network NW, to relay communication between an external equipment and each device in the network structure of the automatic warehouse system 1.

The first gateway device 19 has a function to upload to the maintenance server 3 the operation information FI at a predetermined timing, which is the image data of the camera CA1 to CA4, the measurement data of the sensor SE, error occurrence information of each facility, or the like, stored in the first external storage device 13a or the second external storage device 13b.

In addition, the first gateway device 19 can upload to the maintenance server 3 the operation information FI, which is information about maintenance of each facility, the operation information of each facility, a picture of a facility taken by the operator or the like, information about order placement of a component of each facility, or the like.

It can be appropriately determined that the above-mentioned predetermined timing is every constant time period (e.g. every one hour, every day, or the like), a timing at which the new operation information FI is stored, a timing at which existing operation information FI is updated, a timing at which stored operation information FI becomes a certain size, or the like, for example.

In addition, the first gateway device 19 may upload to the maintenance server 3 the operation information FI that is data stored in a storage portion of the camera CA1 to CA4, the sensor SE, or the like, information (a part thereof) managed by the management server, or the like.

When uploading the operation information FI to the maintenance server 3, the first gateway device 19 may associate the operation information FI to be uploaded with information for identifying the device that acquired the operation information FI (e.g. an ID of each device (the camera CA1 to CA4, the sensor SE, or the like), or an address of each device, or the like). In this way, the maintenance server 3 can determine that the operation information FI of which facility in the automatic warehouse system 1 (automatic warehouse 11) is received, based on the identification information associated with the received operation information FI.

Other than that, the first gateway device 19 may assign each operation information FI with a file name including information unique to the device that acquired the operation information FI in the automatic warehouse system 1. In this way, the maintenance server 3 can determine that the operation information FI of which facility in the automatic warehouse system 1 (automatic warehouse 11) is received, base on the file name of the received operation information FI.

### (3) Maintenance Base

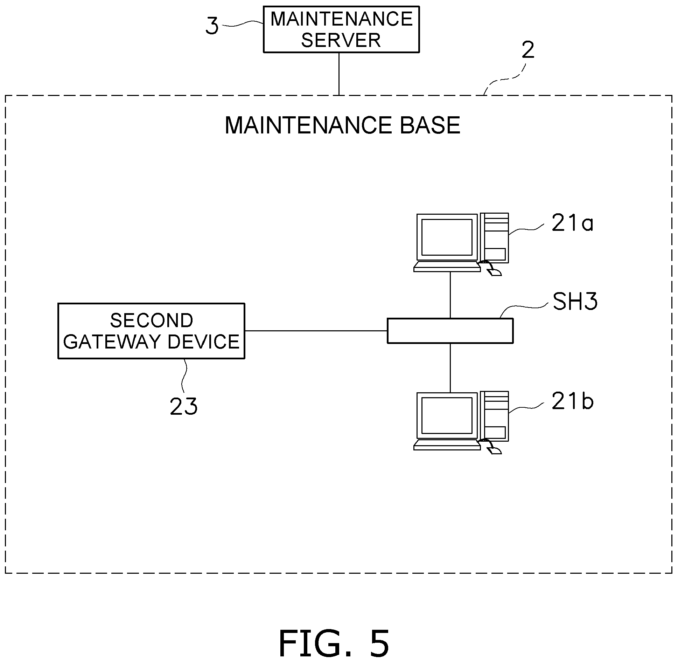

With reference to Fig. 5, a specific structure of the maintenance base 2 included in the communication system 100 is described below. Fig. 5 is a diagram illustrating a structure of the maintenance base.

The maintenance base 2 includes the maintenance terminals 21a and 21b. The maintenance terminals 21a and 21b are connected with a third switching hub SH3. The maintenance terminal 21a, 21b are personal computers, for example, and they are used by the maintainer residing at the maintenance base 2 when maintaining a device or the like in the automatic warehouse system 1.

The maintenance base 2 includes a second gateway device 23. The second gateway device 23 is a computer system including a CPU, a storage device (such as a RAM, a ROM, an SSD, a hard disk, or the like), and various interfaces such as a network interface. In addition, the second gateway device 23 may be hardware implementing a part or a whole of its functions using an SoC or the like.

The second gateway device 23 is connected with the third switching hub SH3 and an external network, to relay communication between the external equipment and the maintenance terminal 21a, 21b.

In addition, the second gateway device 23 has a function to upload to the maintenance server 3 the maintenance information MI at a predetermined timing, which is information stored in the maintenance terminal 21a, 21b, and/or, a core system (not shown) disposed at the maintenance base 2. It can be appropriately determined that the above-mentioned predetermined timing is every constant time period (e.g. every one hour, every day, or the like), a timing at which the new maintenance information MI is stored, a timing at which the existing maintenance information MI is updated, a timing at which the stored maintenance information MI becomes a certain size, or the like, for example.

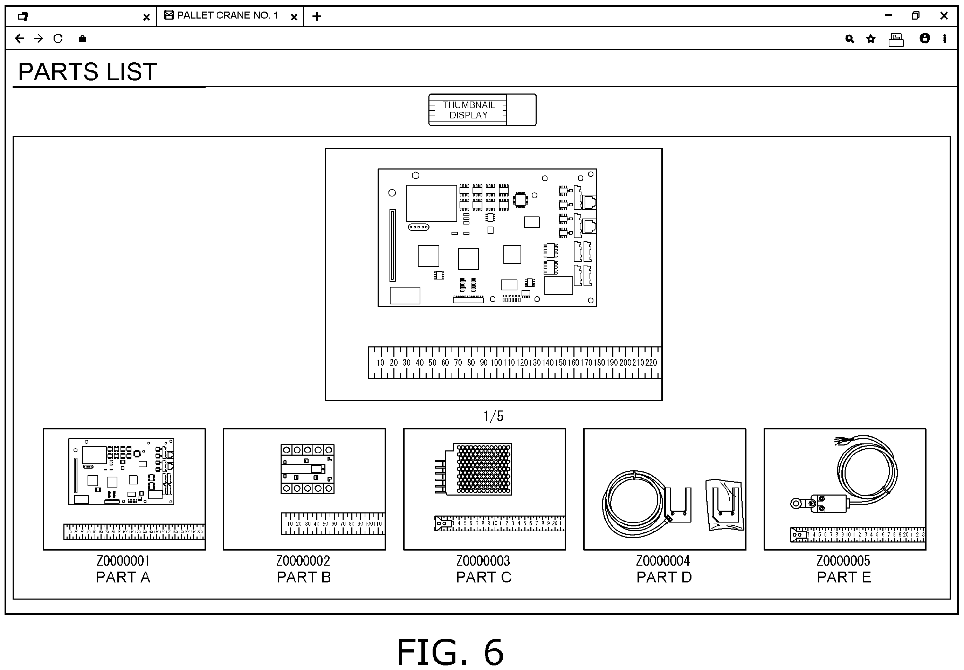

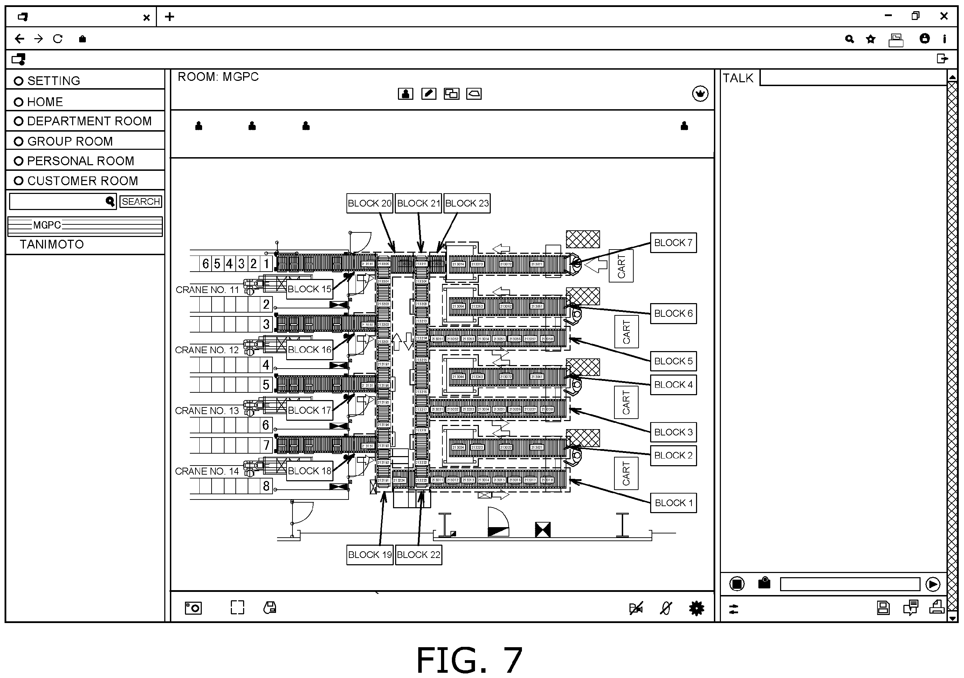

As an example of the maintenance information MI, for example, there is a parts list that is a list of components of the facility as illustrated in Fig. 6, a layout diagram indicating a layout of the facility (the automatic warehouse 11) in the automatic warehouse system 1 as illustrated in Fig. 7, or the like. Figs. 6 and 7 are diagrams illustrating examples of the maintenance information.

Other than that, the second gateway device 23 can upload to the maintenance server 3 the maintenance information MI that is a service history of each facility in the automatic warehouse system 1, a service report of each facility, or the like.

The maintenance server 3 can determine that the maintenance information MI of which facility in the automatic warehouse system 1 is received from the second gateway device 23 (the maintenance base 2), based on its file name, for example.

### (4) Maintenance Server

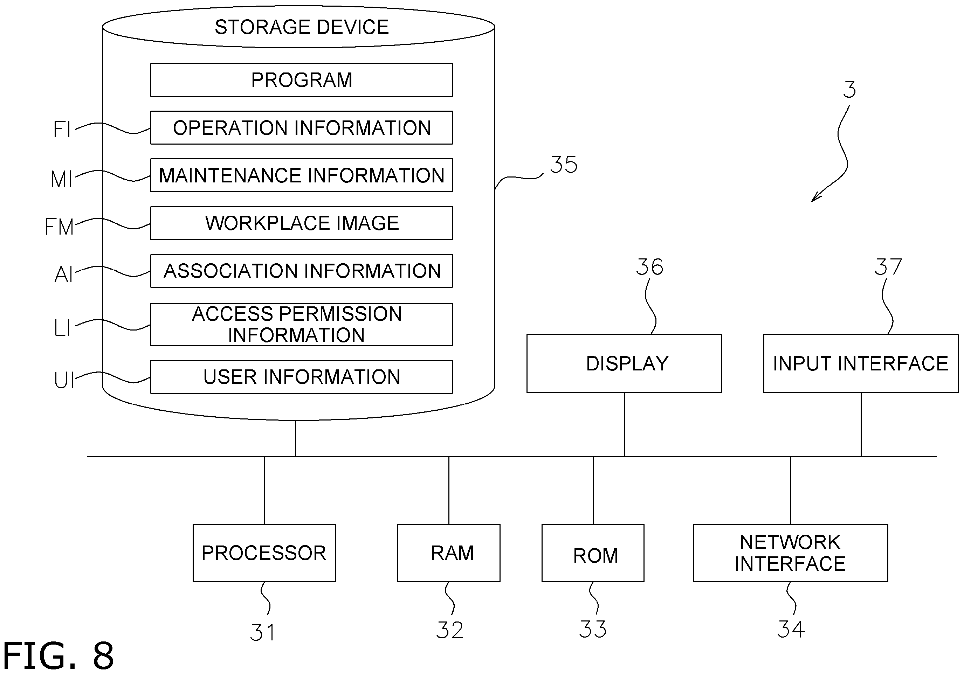

With reference to Fig. 8, a specific hardware structure of the maintenance server 3 included in the communication system 100 is described below. Fig. 8 is a diagram illustrating a hardware structure of the maintenance server.

As illustrated in Fig. 8, the maintenance server 3 is a computer system including a processor 31, a RAM 32, a ROM 33, a network interface 34, and a storage device 35.

The processor 31 is, for example, a CPU, or an SoC in which a CPU and various interfaces are integrated in a single chip. The processor 31 executes a program stored in the storage device 35 or the like, to perform various information processing that are carried out in the maintenance server 3.

The RAM 32 stores information needed temporarily, such as a program stored in the storage device 35. The ROM 33 stores a program, settings, and the like for controlling the maintenance server 3.

As such, the processor 31, the RAM 32, and the ROM 33 are hardware structures to perform a control that performs functions of the maintenance server 3. Therefore, these three hardware structures are referred to as a "control unit" of the maintenance server 3, hereinafter. In other words, this control unit executes the program stored in the storage device 35 and performs functions (operations) of the maintenance server 3 described later.

The network interface 34 performs communication with an external terminal and/or device. The network interface 34 is, for example, an Ethernet (registered trademark) card that uses wired communication to communicate with the external terminal and/or device, and/or, a wireless LAN interface that uses wireless communication to communicate with the external terminal and/or device.

It should be noted that when the maintenance server 3 sends various information and data to the external equipment, the control unit outputs the information and data to the external via the network interface 34.

In addition, when the maintenance server 3 receives various information and data from the external equipment, the control unit receives the information and data from the external via the network interface 34.

The storage device 35 stores the program executed by the maintenance server 3, various information to be stored in the maintenance server 3, and various setting information.

In this embodiment, the various information to be stored in the maintenance server 3 is the operation information FI about the facility (the automatic warehouse 11) in the automatic warehouse system 1, and the maintenance information MI about maintenance of the facility managed at the maintenance base 2.

On the other hand, in this embodiment, the setting information stored in the storage device 35 of the maintenance server 3 is workplace image FM, association information AI, user information UI, and access permission information LI.

The workplace image FM is an image showing the automatic warehouse system 1. Specifically, the workplace image FM is a photograph image or a digital model of the automatic warehouse system 1. The workplace image FM visualizes the facilities of the automatic warehouse system 1 as an image. The visualized image of the facility is referred to as an object O.

Although details will be described later, the workplace image FM is used when generating a composite image SI (described later) by associating the object O in the workplace image FM with the corresponding operation information FI and/or maintenance information MI.

The association information AI is information storing association between the facility in the automatic warehouse system 1 and the operation information FI and the maintenance information MI. In the same manner as the workplace image FM, the association information AI is used when generating the composite image SI.

The user information UI is information for managing users who can log in to the maintenance server 3. The user information UI stores a user ID and a password to log in to the maintenance server 3.

Other than that, the user information UI may store information of each user (such as an affiliation, a contact address, and an authority level of the user).

The access permission information LI stores information about the operation information FI and the maintenance information MI that can be accessed by each user. Specifically, the access permission information LI stores the user ID registered in the user information UI and the list of the operation information FI and the maintenance information MI that can be accessed by the user having the corresponding user ID associated with each other.

Other than that, the access permission information LI may exist for each of the operation information FI and the maintenance information MI. In this case, the access permission information LI stores a list of the user IDs of users who can access to the corresponding operation information FI or maintenance information MI.

With the structure described above, the maintenance server 3 can receive the operation information FI about the facility in the automatic warehouse system 1 and the maintenance information MI about maintenance of the facility from the automatic warehouse system 1 and the maintenance base 2, and can store the information.

In addition, as described later, the maintenance server 3 having this structure can generate the image (called the composite image SI) by associating the object O (described later) in the workplace image FM with the operation information FI and the maintenance information MI. As described later, this composite image SI is provided to the operator terminal 17 and the maintenance terminal 21a, 21b, when sharing the operation information FI and the maintenance information MI between the operator terminal 17 and the maintenance terminal 21a, 21b.

Other than the structure described above, the maintenance server 3 may include a display 36. The display 36 is, for example, a display such as a liquid crystal display or an organic EL display, which displays various information about the maintenance server 3. In this way, the user can manage the maintenance server 3 while referring to the information displayed on the display 36, for example.

The maintenance server 3 may further include an input interface 37 that receives an input from the user. The input interface 37 is an input device such as a keyboard, a mouse, or a touch panel, for example. In this way, the user can directly manage the maintenance server 3 by using the input interface 37.

Note that, even if the input interface 37 and/or the display 36 described above are not included, the maintenance server 3 can be managed by using a terminal that can access the maintenance server 3 via the network interface 34, for example, while referring to the information about the maintenance server 3.

### (5) Schematic Operation of Maintenance Server

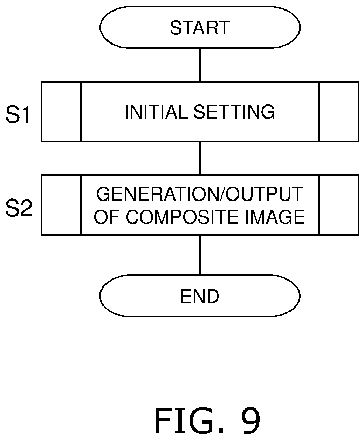

An operation of the maintenance server 3 in the communication system 100 according to this embodiment is described hereinafter. First, with reference to Fig. 9, a schematic operation of the maintenance server is described. Fig. 9 is a flowchart illustrating a schematic operation of the maintenance server 3.

The maintenance server 3 stores the operation information FI of the automatic warehouse system 1 and the maintenance information MI of the maintenance base 2, to enable the stored information to be shared between the operator terminal 17 and the maintenance terminal 21a, 21b. In order to perform this function, the maintenance server 3 executes initial setting (Step S1), and generation and output of the composite image SI (Step S2).

The initial setting in Step S1 is executed when the communication system 100 is installed, for example. In the initial setting, the maintenance server 3 mainly performs (i) creating (generating) the workplace image FM, (ii) collecting (receiving) the operation information FI and the maintenance information MI, and (iii) associating the object O in the workplace image FM with the operation information FI as well as the maintenance information MI.

The generation and output of the composite image SI in Step S2 is executed to provide the operation information FI and the maintenance information MI. In the operation of generating and outputting the composite image SI, the maintenance server 3 generates (creates) the composite image SI based on the association between the object O in the workplace image FM and the operation information FI as well as the maintenance information MI. After that, the generated composite image SI is outputted to the operator terminal 17 and the maintenance terminal 21a, 21b.

### (6) Detailed Operation of Maintenance Server

### (6-1) Initial Setting Operation

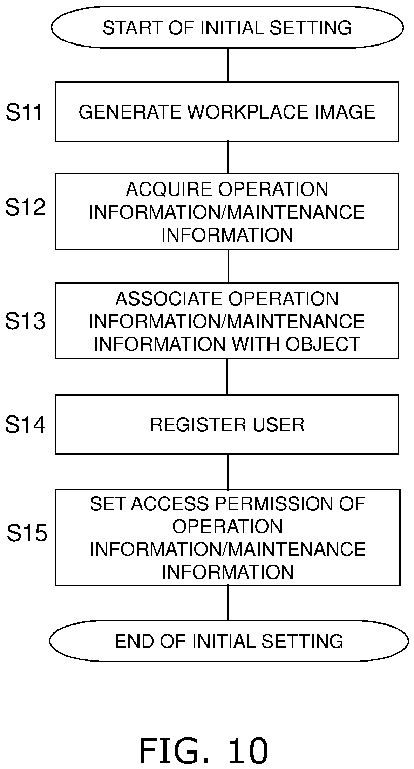

The above-mentioned initial setting operation in Step S1, and the generating and outputting operation of the composite image SI in Step S2 are described in detail. First, with reference to Fig. 10, the detailed initial setting operation of the maintenance server 3 is described. Fig. 10 is a flowchart illustrating the initial setting operation in the maintenance server.

In the initial setting operation of the maintenance server 3, the workplace image FM is first generated and stored in the storage device 35 in Step S11.

If the workplace image FM is a photograph image of the automatic warehouse system 1, the photograph images are taken at a plurality of locations in the automatic warehouse system 1. Next, considering a location in the automatic warehouse system 1 at which each photograph image was taken, the plurality of photograph images are combined to generate the workplace image FM. Other than that, a panorama image may be taken as the photograph image to be the workplace image FM.

On the other hand, if the workplace image FM is a digital model of the automatic warehouse system 1, a three-dimensional image of the automatic warehouse system 1 that is drawn using a CAD or the like is used as the workplace image FM, for example.

Next, in Step S12, the maintenance server 3 receives the operation information FI stored in the external storage device or the like in the automatic warehouse system 1 from the first gateway device 19 of the automatic warehouse system 1, and stores the same in the storage device 35.

In addition, the maintenance server 3 receives the maintenance information MI stored in the maintenance terminal 21a, 21b, the core system, or the like at the maintenance base 2 from the second gateway device 23 at the maintenance base 2, and stores the same in the storage device 35.

After acquiring the operation information FI and the maintenance information MI, the maintenance server 3 associates the received operation information FI and the maintenance information MI with the object O in the workplace image FM stored in the storage device 35, in Step S13. This association can be performed as follows, for example.

First, in the workplace image FM, the image indicating the facility of the automatic warehouse system 1 is specified as the object O. After that, for each of the specified objects O, its coordinate value is extracted. The coordinate value of the object O can be, for example, location (coordinate value) of pixels indicating the object O in the workplace image FM.

Next, the extracted coordinate value of the object O and the link to the operation information FI and/or the maintenance information MI corresponding to the object O are associated with each other and stored in the association information AI. In other words, the association information AI generated by this process is the information that stores the coordinate value of the object O and the link to the operation information FI and/or the maintenance information MI corresponding to the object O that are associated with each other.

Here, the link to the operation information FI and/or the maintenance information MI means information indicating storage location of the operation information FI and/or the maintenance information MI in the maintenance server 3. The link is a URL for access to the operation information FI and/or the maintenance information MI, for example.

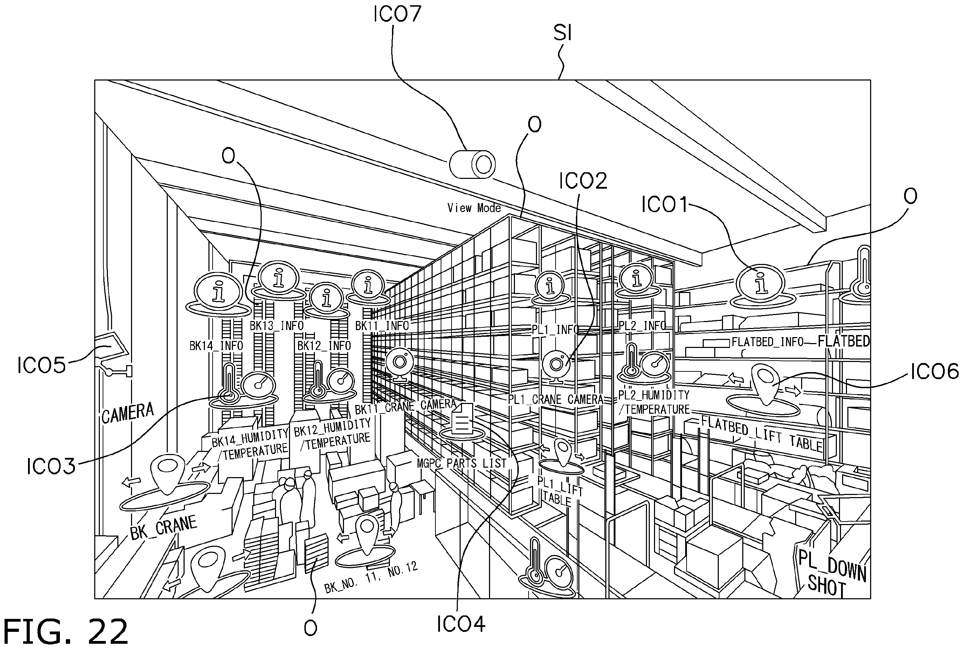

It should be noted that, as described later, the above-mentioned coordinate value of the specified object O is used when attaching an icon indicating that there is the operation information FI and/or maintenance information MI (Fig. 22) to the workplace image FM.

Further, in Step S14, a registration of the user who can log in to the maintenance server 3 is performed. Specifically, the user is registered by recording the user ID and the password to log in to the maintenance server 3 in the user information UI.

As described later, in a "chat function" provided by the maintenance server 3, the user enters a "room" that is individually created, in order to perform the chat. In other words, individual chat is performed in each "room".

Therefore, in the user registration in Step S14, the creation of the "room" that the user to be registered can enter is performed together with registration of the user ID and the password. The setting of the "room" is associated with the corresponding user ID and password, and is recorded in the user information UI.

After performing the user registration, in Step S15, the control unit of the maintenance server 3 sets an access permission of the operation information FI and maintenance information MI for each registered user. Specifically, the access permission information LI is generated by associating the registered user ID with the list of the operation information FI and the maintenance information MI that the user having the user ID can access.

Other than that, if the access permission information LI exists for each of the operation information FI and the maintenance information MI, the access permission can be set by the storing a list of user IDs that can access to the corresponding operation information FI or maintenance information MI in the access permission information FI.

By performing the above-mentioned Steps S11 to S15 as the initial setting, the maintenance server 3 enables to prove the operator terminal 17 in the automatic warehouse system 1 and the maintenance terminal 21a, 21b at the maintenance base 2 with the operation information FI and the maintenance information MI stored in the maintenance server 3. In other words, the operation information FI and the maintenance information MI can be shared between the operator terminal 17 and the maintenance terminal 21a, 21b via the maintenance server 3.

It should be noted that the flow of the initial setting operation illustrated in the flowchart of Fig. 10 can be appropriately modified. For instance, the user registration in Step S14 can be performed first, and then Steps S11 to S13 and S15 can be performed. In addition, the order of performing the generation of the workplace image FM in Step S11 and the acquisition of the information in Step S12 can be changed.

### (6-2) Generation/Output Operation of Composite Image

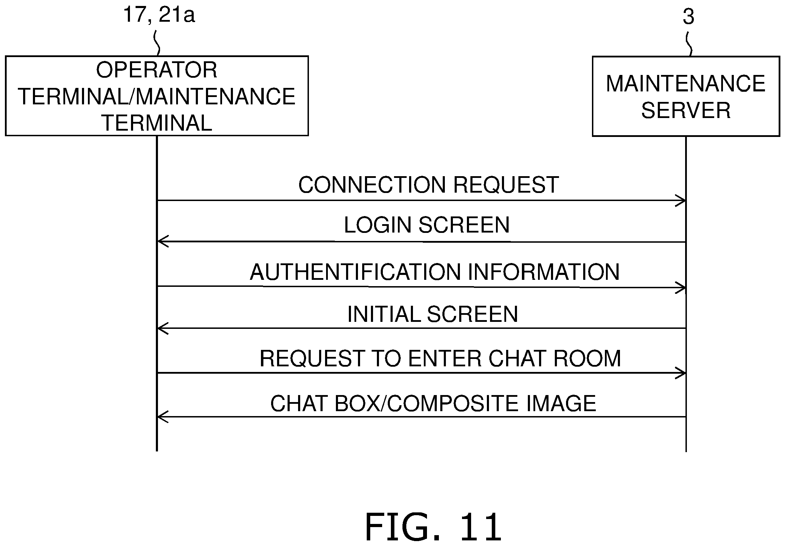

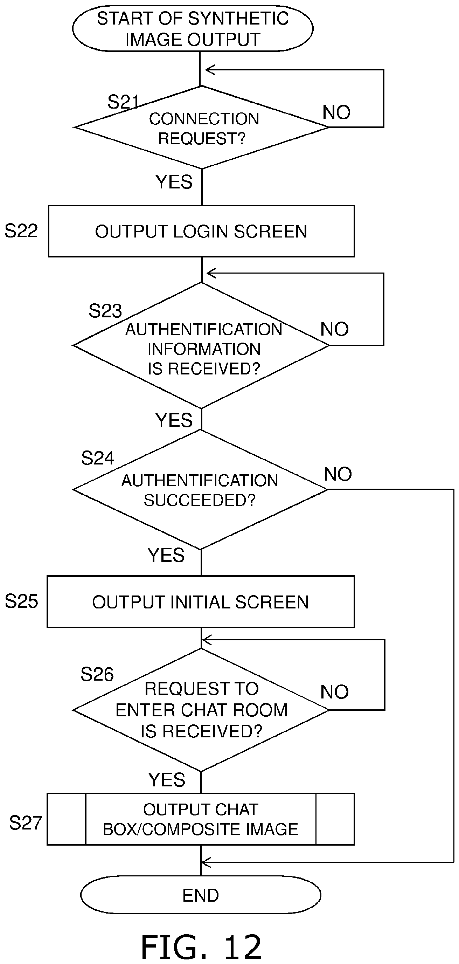

With reference to Figs. 11 and 12, the detailed operation of generating and outputting the composite image SI in Step S2 is described hereinafter. Fig. 11 is a diagram illustrating transmission and reception of information in operations until composite image output. Fig. 12 is a flowchart illustrating an operation of the maintenance server in the operations until the output of the composite image. The following description exemplifies a case where the maintainer uses the maintenance terminal 21a at the maintenance base 2.

The generation and output of the composite image SI starts when the operator terminal 17 or the maintenance terminal 21a sends a connection request ("connection request" in Fig. 11) to the maintenance server 3 that has finished the initial setting operation and is in operation.

Specifically, for example, an address of the maintenance server 3 is designated in a web browser on the operator terminal 17 or the maintenance terminal 21a, and this web browser outputs the connection request to the maintenance server 3.

When receiving the connection request ("Yes" in Step S21), the maintenance server 3 outputs a login screen I1 to the operator terminal 17 or the maintenance terminal that has sent the connection request, in Step S22 in Fig. 12 ("login screen" in Fig. 11).

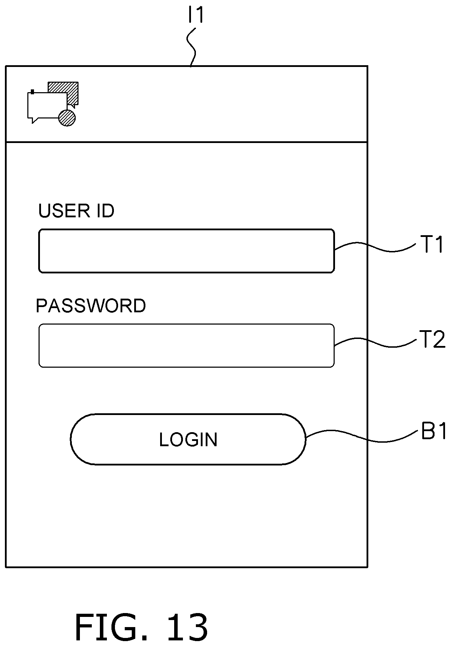

For instance, the login screen I1 as illustrated in Fig. 13 is outputted. Fig. 13 is a diagram illustrating an example of the login screen.

The operator or the maintainer inputs the user ID in a user ID input box T1 of the login screen I1 displayed on the operator terminal 17 or the maintenance terminal 21a, and inputs the password in a password input box T2. After that, when a login button B1 is pressed, the inputted user ID and password are outputted as authentication information to the maintenance server 3 ("authentication information" in Fig. 11).

When receiving the authentication information from the operator terminal 17 or the maintenance terminal 21a ("Yes" in Step S23), the maintenance server 3 performs an authentication process using the received authentication information, in Step S24.

Specifically, the maintenance server 3 compares the received authentication information, i.e., the user ID and the password with the user ID and the password stored in the user information UI.

As a result of the comparison described above, if the authentication fails ("No" in Step S24) due to the reason that the received authentication information does not exist in the user information UI, or that the received authentication information does not match the user ID and the password stored in the user information UI, or other reason, the maintenance server 3 finishes the composite image output process.

If the authentication has failed, the maintenance server 3 notifies the operator terminal 17 or the maintenance terminal 21a, which is trying to log in, of the failure of the authentication. In addition, the maintenance server 3 may finish the composite image output process after the authentication fails a predetermined number of times.

In contrast, if the received authentication information matches the user ID and the password in the user information UI and the authentication succeeds ("Yes" in Step S24), the maintenance server 3 proceeds to Step S25.

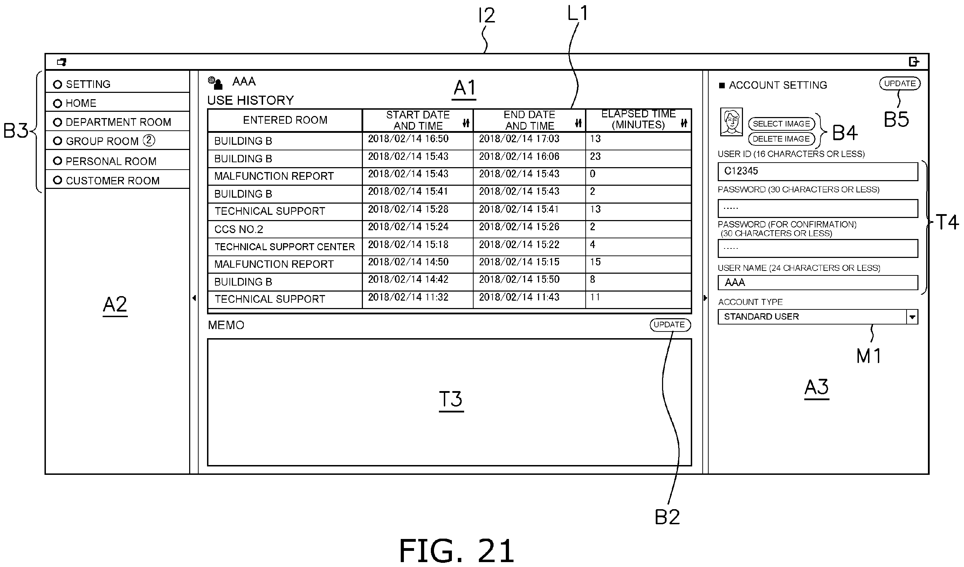

In Step S25, the maintenance server 3 outputs an initial screen 12 (Fig. 21) to the operator terminal 17 or the maintenance terminal 21a that has been authenticated ("initial screen" in Fig. 11). A structure of the initial screen 12 will be described later.

After the initial screen 12 is displayed on the operator terminal 17 or the maintenance terminal 21a, the operator or the maintainer uses the initial screen 12 to select the room in which the operator or the maintainer wants to enter. The operator terminal 17 or the maintenance terminal 21a sends a join request of the chat in the selected room to the maintenance server 3 as a request of entering a chat room ("request of entering a chat room" in Fig. 11).

When receiving the request of entering the chat room from the operator terminal 17 or the maintenance terminal 21a ("Yes" in Step S26), the maintenance server 3 generates the composite image SI in Step S27, and outputs the same together with a chat box to the operator terminal 17 or the maintenance terminal 21a that has made the request of entering the chat room.

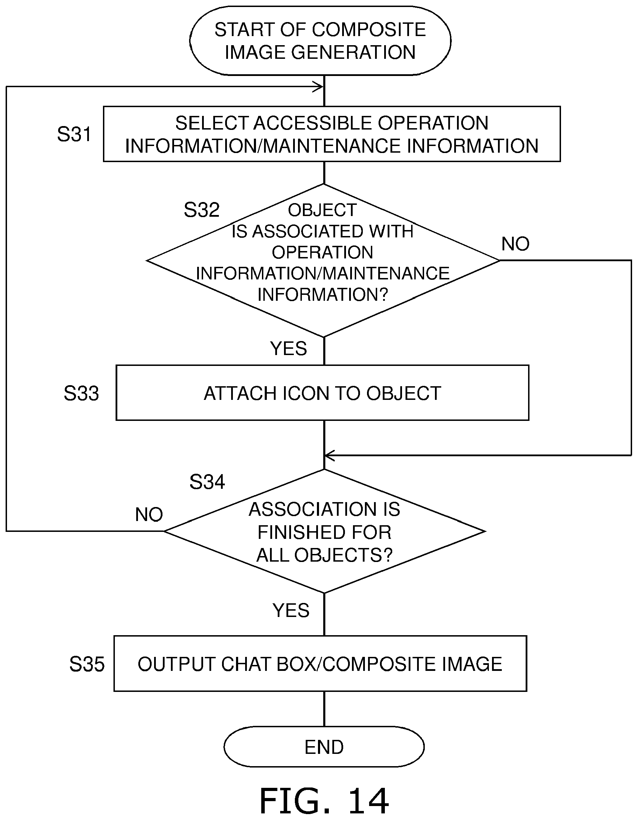

With reference to Fig. 14, the operation of generating and outputting the composite image SI performed in Step S27 is described in more detail. Fig. 14 is a flowchart illustrating the generating process of the composite image.

First, in Step S31, the maintenance server 3 selects the operation information FI and/or the maintenance information MI that the target user can access, for each object O in the workplace image FM.

Specifically, the maintenance server 3 first refers to the access permission information LI, and determines the operation information FI and/or the maintenance information MI that can be accessed by the operator or the maintainer identified by the user ID.

Next, the maintenance server 3 retrieves only the operation information FI and/or maintenance information MI that can be accessed by the target operator or the maintainer from the operation information FI and/or the maintenance information MI associated with each object O in the association information AI. Further, the maintenance server 3 associates the each object O with the retrieved operation information FI and/or maintenance information MI, to generate the association information unique to each target operator or each maintainer.

After generating the unique association information described above, the maintenance server 3 determines in Step S32 whether or not each object O in the workplace image FM is associated with the operation information FI and/or the maintenance information MI in the unique association information.

In the unique association information, if the object O is associated with the operation information FI and/or the maintenance information MI ("Yes" in Step S32), the maintenance server 3 attaches a predetermined icon at a coordinate position in the workplace image FM where this object O exists, in Step S33. This predetermined icon shows that the operation information FI and/or the maintenance information MI are associated with the object O.

It should be noted that, as described later, a type (shape) of the icon to be attached is different depending on a type of the associated operation information FI and/or maintenance information MI.

In addition, the maintenance server 3 generates a link to allow referring to the operation information FI and/or the maintenance information MI selected in Step S31 by clicking the icon, based on the unique association information described above.

In the automatic warehouse system 1 having many facilities, a plurality of pieces of operation information FI and/or maintenance information MI are associated with one object O (facility). Therefore, in this embodiment, the links to the operation information FI and/or the maintenance information MI associated with each object O are made and managed as a list. In addition, in this embodiment, a link to this list is associated with each object O.

In contrast, in the unique association information, if the object O is not associated with operation information FI and/or maintenance information MI ("No" in Step S32), the generating process of the composite image SI proceeds to Step S34 without attaching the icon to the object O.

After attaching the icon to the object O, it is checked in Step S34 whether or not Steps S31 to S33 have been performed for all objects O in the workplace image FM. In other words, it is checked whether or not the operation information FI and the maintenance information MI to be associated are determined for all objects O.

If the information association is not determined for all objects O ("No" in Step S34), Steps S31 to S33 are further performed for the rest of the objects O.

In contrast, if the information association is determined for all objects O ("Yes" in Step S34), the generation of the composite image SI (Fig. 22) is finished.

Although a detailed structure will be described later, in the composite image SI, if the object O in the workplace image FM is associated with the operation information FI and the maintenance information MI, the icon is attached to the object O. In addition, depending on a type of information associated with the object O, a shape of the icon is different.

With this composite image SI, it is possible to provide the operator and the maintainer with information about which type of operation information FI and maintenance information are associated with which object O, in a visually organized manner.

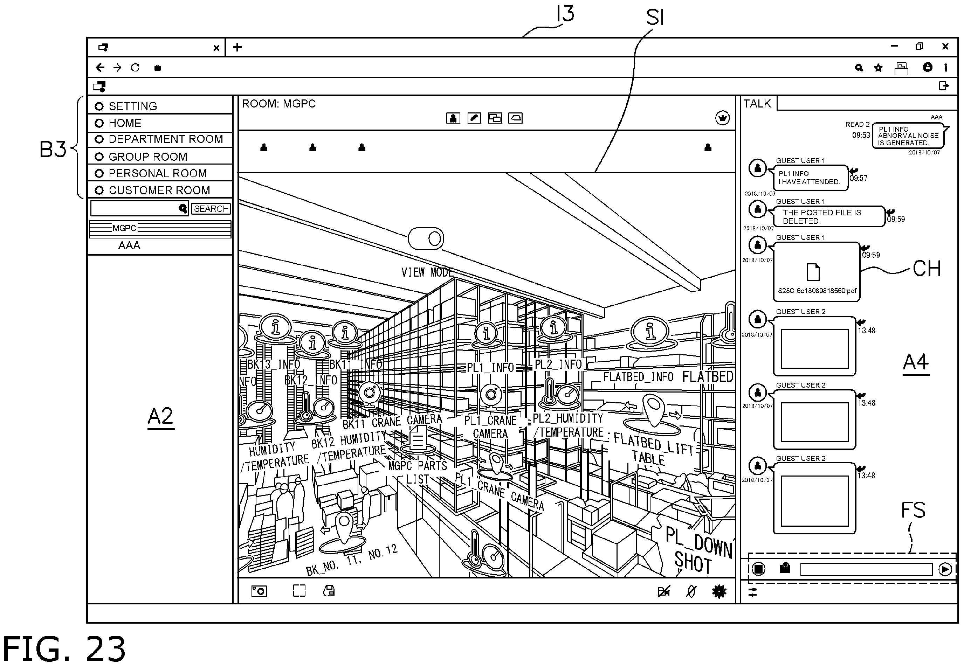

After generating the composite image SI, the maintenance server 3 sends a display screen 13 including the composite image SI and a chat box A4 (Fig. 23) to the operator terminal 17 or the maintenance terminal 21a that has logged in with the user ID that was used for generating the composite image SI ("chat box/composite image" in Fig. 11), in Step S35.

### (6-3) Summary about Operations until Output of Composite Image

The operations until the maintenance server 3 outputs the composite image SI, which is described above with reference to Figs. 9 to 14, can be summarized as follows.

In the operations until the output of the composite image SI, the maintenance server 3 generates the workplace image FM showing the workplace (Step S11), and in this workplace image FM, the object O indicating the facility of the workplace is associated with the operation information FI and the maintenance information MI of the corresponding facility (Steps S12 to S13). Based on this association, the composite image SI is generated (Step S27, Steps S31 to S34). Further, the maintenance server 3 outputs the composite image SI to the operator terminal 17 and the maintenance terminal 21a, 21b (Steps S27 and S35).

In this way, by associating the object O indicating the facility existing in the workplace with the information about the facility indicated by the object O (the operation information FI, the maintenance information MI) to generate the composite image SI, the maintenance server 3 can organize the operation information FI and the maintenance information MI for each facility.

In addition, by providing the composite image SI as a screen, the operator and the maintainer can easily find desired operation information FI and/or maintenance information MI while referring to the composite image SI.

In addition, even in the case where the composite image SI is generated by each of the operator and the maintainer, the operation information FI and the maintenance information MI that can be accessed by both the operator and the maintainer are associated with the corresponding object O in the composite image SI.

Therefore, in this case, the composite image SI can be shared in the state where the operation information FI and the maintenance information MI that can be accessed by both the operator and the maintainer are organized for each facility (object O). As a result, the operator and the maintainer can easily find desired operation information FI and maintenance information MI that are shared.

In the operations described above, the maintenance server 3 performs the authentication process of the maintenance terminal 21a, 21b and the operator terminal 17 (Steps S2 to S24), and the composite image SI is outputted to the maintenance terminal 21a, 21b and the operator terminal 17 that have been successfully authenticated ("Yes" in Step S24), as a result of the authentication process.

In this way, because the composite image SI can be provided only to specific users, the security of the composite image SI can be improved.

Further, the authentication information includes the user ID for identifying the operator and the maintainer. In the embodiment described above, in which the user ID is included in the authentication information, the composite image SI is generated by associating the object O with only the operation information and/or the maintenance information that can be accessed by the operator or the maintainer identified by the user ID (Step S31).

The composite image SI described above (a composite image with an access permission) is outputted to the operator terminal 17 or the maintenance terminal 21a, 21b that has logged in with the user ID used for generating the composite image SI (Step S35).

In this way, the accessible operation information FI and maintenance information MI can be set for each operator and each maintainer identified by the user ID.

In addition, the composite image SI includes the icon (first icon ICO1 to fifth icon ICO5) showing that the object is associated with the operation information FI and the maintenance information MI. In this way, it is possible to inform the operator and the maintainer that the facility (object O) is associated with the operation information FI and the maintenance information MI, in a visually organized manner.

In addition, when the composite image SI is outputted, the chat box A4 (Fig. 23), which provides the chat function using the operator terminal and the maintenance terminal, is outputted together with the composite image SI. In this way, for example, while performing chat in the chat box A4, the operator and the maintainer can refer to the composite image SI and access to the desired operation information FI or maintenance information MI. For instance, the chat box A4 is displayed outside the area where the composite image SI is displayed.

### (6-4) Information Providing Operation

As described above, when the composite image SI is generated and outputted, the screen 13 is displayed, in which the composite image SI and the chat box A4 are both displayed. When the screen 13 is displayed, the communication system 100 starts providing the operation information FI and the maintenance information MI stored in the maintenance server 3.

In other words, the operator and the maintainer can access to the operation information and the maintenance information MI associated with the object O, by referring to the composite image SI and clicking the icon attached to the desired object O.

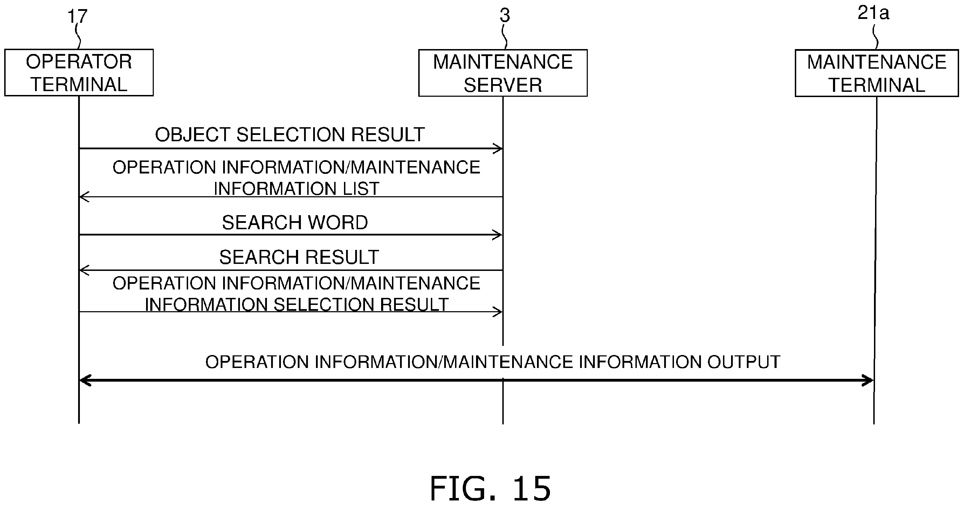

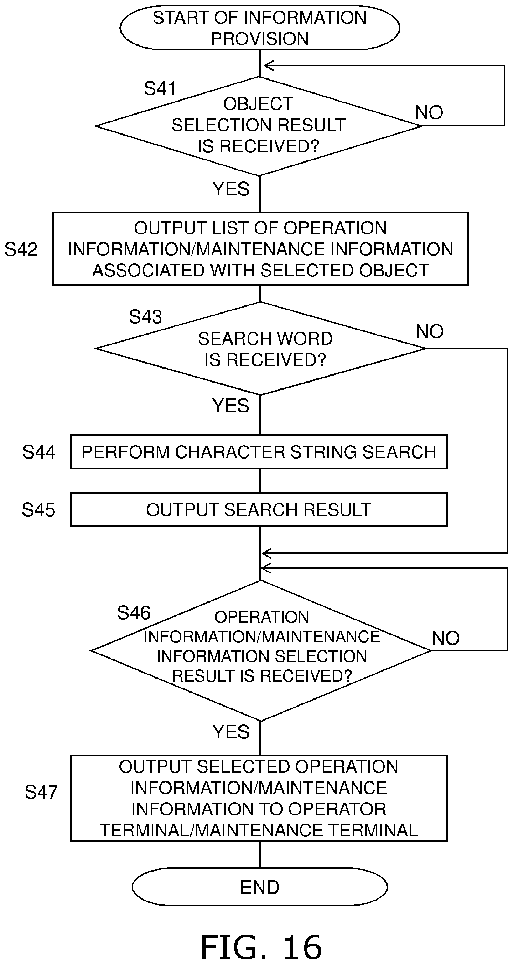

With reference to Figs. 15 and 16, the operation of the maintenance server 3 providing the operation information FI and the maintenance information MI to the operator terminal 17 and the maintenance terminal 21a, 21b, by using the composite image SI (information providing operation) is described in detail, hereinafter. Fig. 15 is a diagram illustrating transmission and reception of information in the information providing operation. Fig. 16 is a flowchart illustrating an operation of the maintenance server in the information providing operation.

In the following description, it is assumed that the operator terminal 17 and the maintenance terminal 21a have logged in to the maintenance server 3, and the composite image SI is generated and displayed on each of the terminals. In addition, it is assumed that the operator and the maintainer chat in the same room, using the operator terminal 17 and the maintenance terminal 21a.

Further, it is assumed that the operator selects the operation information FI and the maintenance information MI associated with a predetermined object O in the composite image SI.

The information providing operation starts when the maintenance server 3 waits for receiving a selection result of the object O from the operator terminal 17 or the maintenance terminal 21a in Step S41. The selection result of the object O is, for example, information indicating which type of icon (first icon ICO1 to fifth icon ICO5) (Fig. 22) attached at which location in the composite image SI is clicked.

It should be noted that, if an icon that does not show that the object O is associated with information (a sixth icon ICO6, a seventh icon ICO7) (Fig. 22) is clicked, the maintenance server 3 performs an operation associated with the icon.

When receiving the selection result of the object O from the operator terminal 17 ("Yes" in Step S41) ("object selection result" in Fig. 15), the maintenance server 3 outputs the list of the operation information FI and the maintenance information MI associated with the selected object O ("operation information/maintenance information list" in Fig. 15) to the operator terminal 17, in Step S42.

As described above, when the composite image SI for each user is generated, the unique association information for each user is generated. Therefore, in this embodiment, the maintenance server 3 outputs a list of information associated with the unique association information of the operator (user ID) who uses the operator terminal 17 to the operator terminal 17 .

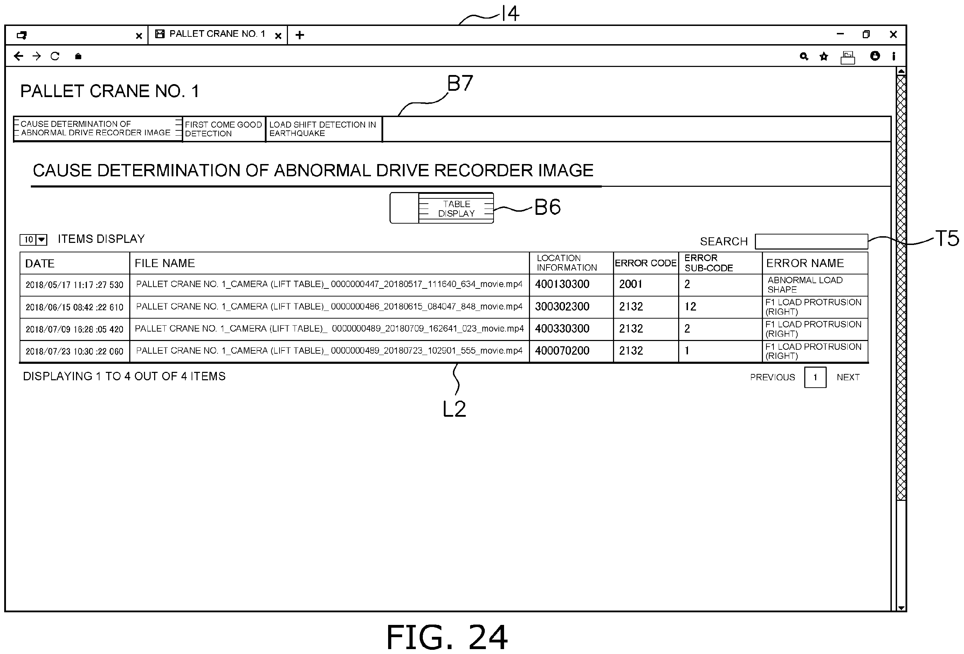

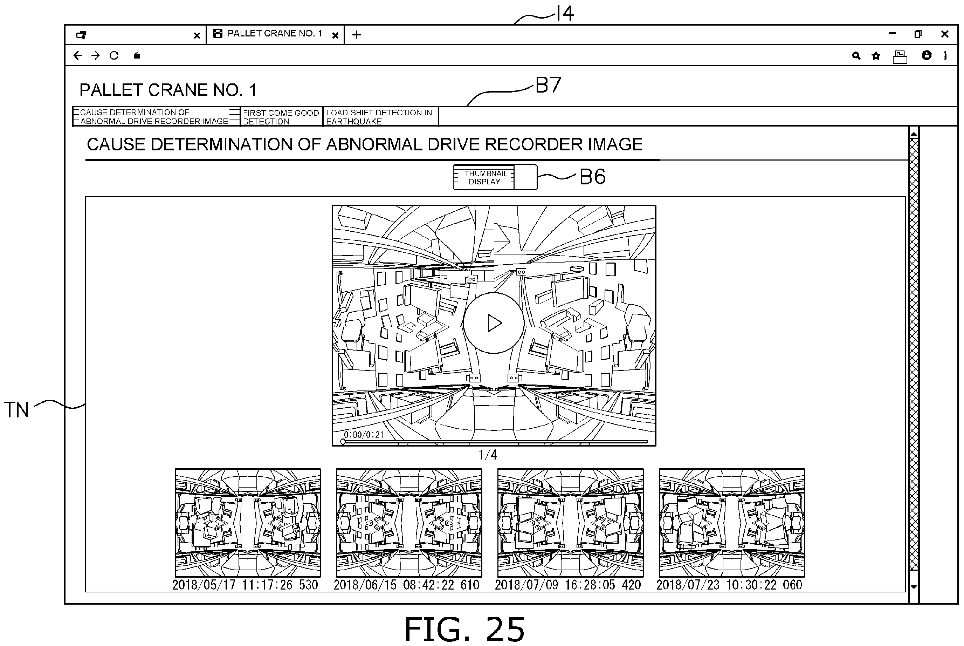

When receiving the list described above, the operator terminal 17 outputs a selection screen 14 (Fig. 24, Fig. 25). The selection screen 14 is a screen for displaying a list of the information associated with the object O selected by the operator.

After outputting the selection screen 14, the maintenance server 3 waits for receiving a search word input in a keyword input box T5 (Fig. 24) on the selection screen 14, or the selection result of the operation information FI or the maintenance information MI.

When a search word is inputted in the keyword input box T5 and the search word is received from the operator terminal 17 ("Yes" in Step S43) ("search word" in Fig. 15), the maintenance server 3 performs character string search of the list displayed in a character string list display box L2, by using the received search word, in Step S44.

After that, in Step S45, the maintenance server 3 sends to the operator terminal 17 the list of the operation information FI and the maintenance information MI matching the search word in the character string search ("search result" in Fig. 15), among the operation information FI and the maintenance information MI included in the list in the character string list display box L2. In this way, a new list matching the search word is displayed on the selection screen 14 displayed on the operator terminal 17.

When receiving information about the operation information FI or the maintenance information MI selected from the list on the selection screen 14 (the selection result) ("Yes" in Step S46 (when the character string search is performed)), the maintenance server 3 outputs the selected operation information FI or maintenance information MI to the operator terminal 17 in Step S47.

The maintenance server 3 further outputs the operation information FI or the maintenance information MI selected by the operator also to the maintenance terminal 21a used by the maintainer who has entered the same room as the operator ("operation information/maintenance information output" in Fig. 15).

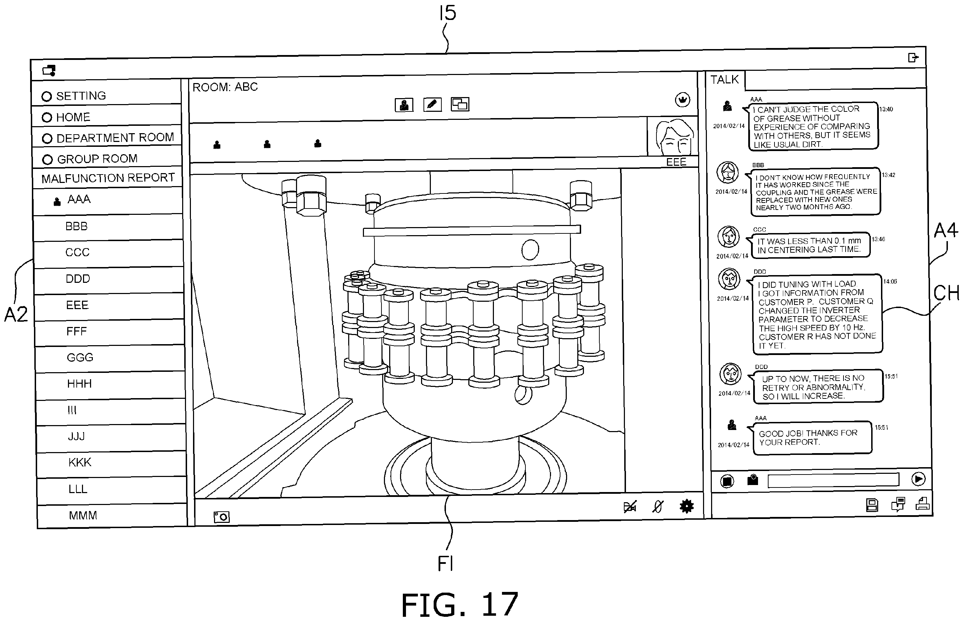

By performing Steps S41 to S47 described above, it is possible to provide the operator terminal 17 used by the operator and the maintenance terminal 21a used by the maintainer (in the same room as the operator) with the same information, i.e. the operation information FI or the maintenance information MI selected by the operator. In other words, a screen 15 as shown in Fig. 17 is shared between the operator terminal 17 and the maintenance terminal 21a. In the screen 15, the operation information FI selected by the operator is shared. Fig. 17 illustrates an example of a screen shared between the operator terminal and the maintenance terminal.

### (6-5) Summary of Information Providing Operation

The operation of providing the operation information FI and the maintenance information MI performed by the maintenance server 3, which is described above with reference to Figs. 15 to 17, can be summarized as follows.

In the information providing operation described above, the maintenance server 3 outputs the operation information FI and the maintenance information MI, which the operator or the maintainer has selected using the composite image SI, to both the operator terminal 17 and the maintenance terminal 21a, 21b (Step S47). In this way, the operator terminal 17 and the maintenance terminal 21a, 21b can share the operation information FI and the maintenance information MI.

In addition, in the information providing operation, the maintenance server 3 outputs to the operator terminal 17 and the maintenance terminal 21a the selection screen 14 (Fig. 24), which displays the list of character strings indicating the operation information FI and the maintenance information MI associated with the object O (Step S42). In addition, the maintenance server 3 performs the character string search of the list in the character string list display box L2 (Steps S43 to S45).

In this way, the character string search of the operation information FI and the maintenance information MI associated with the object O can be easily performed.

### (7) Functions Performed after Information Providing Operation

After the screen 15 as shown in Fig. 17 described above is displayed, the operator and the maintainer can chat using the chat box A4 on the operator terminal 17 and the maintenance terminal 21a, 21b. In addition to chatting, various functions about the composite image SI, the operation information FI, the maintenance information MI, or the like can be performed.

The various functions that can be performed after providing information such as the screen 15 in the communication system 100 according to this embodiment are described in detail, hereinafter.

### (7-1) Association Function between Chat Content and Composite Image

In the chat function, the maintenance server 3 can generate a new composite image SI by associating content of the chat performed using the chat box A4 with the workplace image FM (composite image SI).

For instance, while the chat function is performed, displaying the composite image SI beside the chat box A4, the operator or the maintainer drags a chat content (e.g. a balloon CH displaying chat content (Fig. 17)) to move it to a predetermined position in the composite image SI and releases the drag (i.e. drops).

In this case, the operator or the maintainer can select a plurality of chat contents and associate a series of chat contents with the maintenance server 3, or can associate a part of the chat contents.

When detecting the drop described above, the maintenance server 3 detects the coordinate value of the composite image SI for which the drop is performed. After that, the maintenance server 3 associates the detected coordinate value with the dragged chat content, and stores the result in the association information AI. In addition, the associated chat content is sent to the maintenance server 3 and is stored in the storage device 35.

It should be noted that the chat content can be associated with the composite image SI either at a position of the object O or at a position with no object O in the composite image SI.

In this way, when the maintenance server 3 associates the content of the chat performed by using the chat box A4 with the workplace image FM (composite image SI), the content of the chat in the chat box A4 and the object O indicating the facility at the workplace can be associated with each other. As a result, it is possible to simultaneously grasp the content of the chat and the object O.

In this case, by designating (clicking) the position (object O) associated with the chat content in the composite image SI, the operator and the maintainer can access to the chat content associated with the position or the object O, as a chat history.

As other function of association between the chat content and the composite image SI, this embodiment has a function of "jumping" (accessing) to the position (object O) in the composite image SI associated with the chat content, when the operator or the maintainer clicks the chat content (balloon CH).

Specifically, for example, on the operator terminal 17 or the maintenance terminal 21a, 21b, the operator or the maintainer selects the chat content (balloon CH) to be associated and designates a specific position in the composite image SI.

Detecting this operation, the maintenance server 3 generates "position information" for access to the designated position in the composite image SI (e.g. a coordinate value indicating the position in the composite image), and associates its link with the selected chat content (balloon CH). In this way, it is possible to quickly check the predetermined position in the composite image SI associated with the content of the chat.

### (7-2) Editing and Generating Function of Operation Information/Maintenance Information

While information is being provided in the communication system 100, the operation information FI and the maintenance information MI associated with the current composite image SI can be edited. In addition, new operation information FI and maintenance information MI can be generated and be further associated with the composite image SI. As described later, the operator or the maintainer can drop a file attached to the chat box A4 on the composite image SI to perform the new information association.

For instance, the maintenance server 3 can further associate information generated by the operator using the operator terminal 17 as the operation information FI with the composite image SI.

In addition, the maintenance server 3 can further associate information generated by the maintainer using the maintenance terminal 21a, 21b as the maintenance information MI with the composite image SI.

The operation information FI generated by the operator and the maintenance information MI generated by the maintainer are associated with the facility currently displayed in the composite image SI, for example.

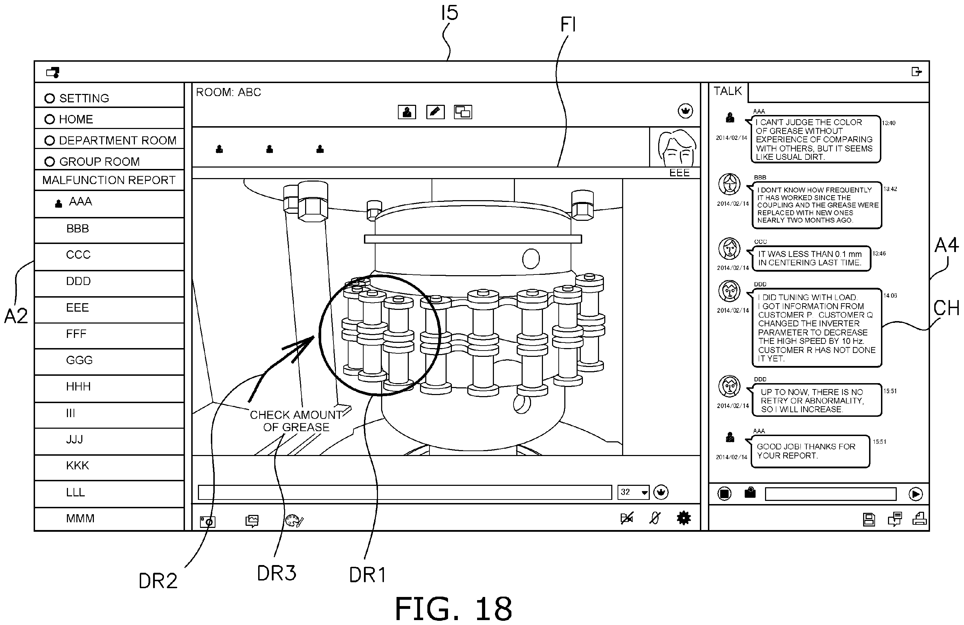

Other than that, as illustrated in Fig. 18, for example, the operator or the maintainer can add graphics DR1, DR2, and a character string DR3 to the operation information FI that is shared between the operator (operator terminal 17) and the maintainer (maintenance terminal 21a, 21b). Fig. 18 is a diagram illustrating an example of editing shared information.

In addition, the maintenance server 3 can also update the existing operation information FI or maintenance information to edited operation information FI or maintenance information MI as described above.

### (8) Operation of Maintenance Server When Information Is Updated

As described above, after the composite image SI is generated and outputted, the operation information FI and the maintenance information MI associated with the object O in the current composite image SI can be added, updated, or deleted.

In addition, other than the operation information FI and the maintenance information MI, as a case where information can be changed after the composite image SI is generated, there exists a case where the workplace image FM is updated due to change of a layout of the automatic warehouse system 1 or the like, a case where information about the user of the maintenance server 3 is changed, and the like.

When the above-mentioned change occurs, the maintenance server 3 generates a new composite image SI, and outputs the new composite image SI to the operator terminal 17 and the maintenance terminal 21a, 21b.

In this way, the maintenance server 3 can provide the operator terminal 17 and the maintenance terminal 21a, 21b with the composite image SI on which the latest information is reflected. In other words, the maintenance server 3 can provide the latest composite image SI and the latest information to the operator terminal 17 and the maintenance terminal 21a, 21b.

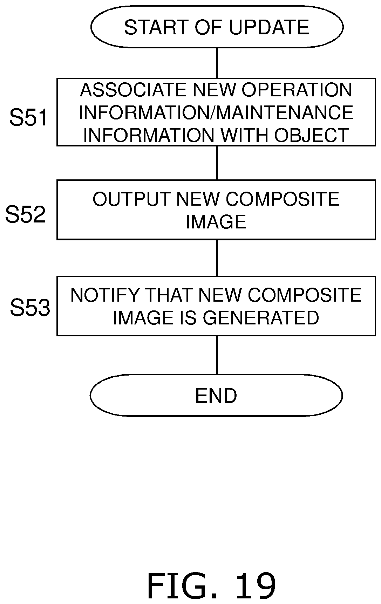

With reference to Fig. 19, the operation of the maintenance server when the information is changed, hereinafter. Fig. 19 is a flowchart illustrating the operation of the maintenance server when the information is changed.

After the current composite image SI is generated and outputted, if various information is changed and it is determined that a new composite image SI needs to be generated, the maintenance server 3 performs new association between the (new) operation information FI and maintenance information MI and the corresponding object O in the (new) workplace image FM in Step S51.

After performing the new association between the object O and the operation information FI as well as the maintenance information MI, the maintenance server 3 generates the new composite image SI based on the new association, and outputs the same to the operator terminal 17 and the maintenance terminal 21a, 21b, in Step S52.

The new association, and the generation and the output of the new composite image SI in Step S51 described above can be performed by performing Steps S11 to S13 and S31 to S35 described above based on the new information. Therefore, detailed description thereof is omitted.

When the information is updated, by generating and outputting the new composite image SI, the maintenance server 3 can generate the latest composite image SI in which the latest information is associated with the object O in the (new) workplace image FM, and provide the latest composite image SI to the operator terminal 17 and the maintenance terminal 21a, 21b.

After generating the new composite image SI as described above, the maintenance server 3 notifies the operator terminal 17 and the maintenance terminal 21a, 21b that the composite image SI is updated, in Step S53.

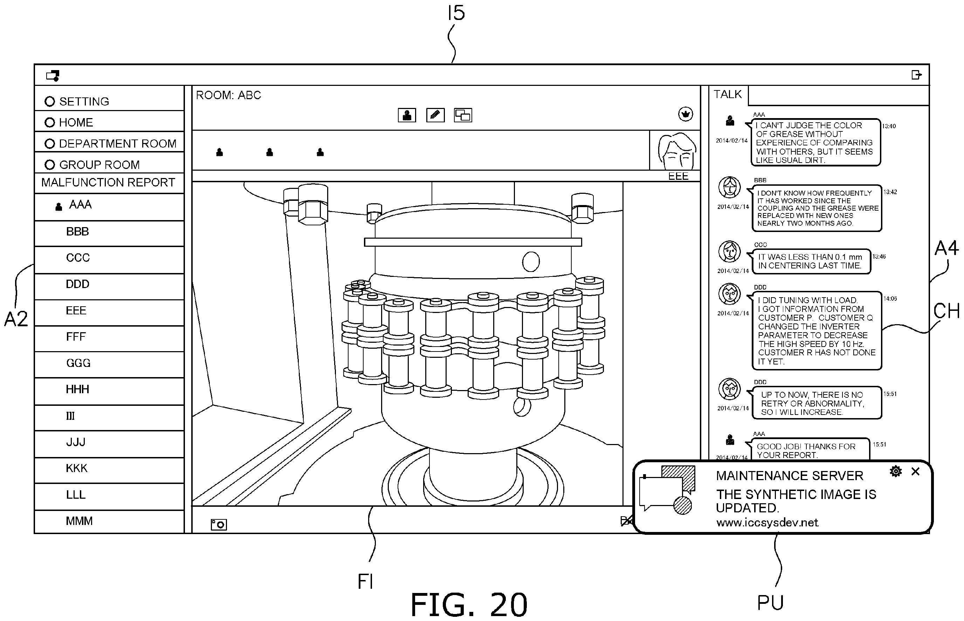

The notification described above is, for example, an instruction to display a popup window PU having a display "The composite image is updated" on the display screen 15 as illustrated in Fig. 20. Fig. 20 is a diagram illustrating an example of the notification that the composite image is updated. Other than that, the notification described above may be an instruction to cause the operator terminal 17 and the maintenance terminal 21a, 21b generate a predetermined sound.

Alternatively, it may be possible to post a message "The composite image is updated." to the chat box A4. In addition, it may be possible that this message includes a link to the updated data, such that the updated data in the composite image SI can be accessed from the link in the message.

In this way, when the new composite image SI is generated, this fact is informed to the operator terminal 17 and the maintenance terminal 21a, 21b, so that the operator using the operator terminal 17 and the maintainer using the maintenance terminal 21a, 21b can easily recognize that the new composite image SI (latest composite image SI) is generated, i.e., that the composite image SI is updated.

### (9) Structure of Screen

### (9-1) Initial Screen

Hereinafter, a structure of the screen displayed on the operator terminal 17 and the maintenance terminal 21a, 21b is briefly described. It should be noted that the screen shown in the following description is an example, and structure and/or appearance of the display screen can be appropriately modified.

First, with reference to Fig. 21, a structure of the initial screen 12 displayed on the operator terminal 17 and the maintenance terminal 21a, 21b after logging in to the maintenance server 3 is described. Fig. 21 is a diagram illustrating an example of the initial screen. The initial screen 12 has a use history display box A1. The use history display box A1 displays a use history list L1 for displaying a list of the use history, an update button B2 for updating the use history, and a memo box T3 for displaying memos.

The initial screen 12 has a room selection box A2. The room selection box A2 displays selection buttons B3 for selecting a chat room to enter. When one of the selection buttons B3 is pressed, it is requested to enter the chat room of the selected button.

It should be noted that a button of a room that the user cannot enter or exit is not displayed or is invalid (cannot be selected).

The initial screen 12 has a user information change box A3. The user information change box A3 displays an information edit box T4 for editing user information (user ID, password, user name to be associated to the user ID), an image change button B4 for changing a user image (avatar), a type change box M1 for changing an account type, and an update button B5 for updating user information when pressed.

### (9-2) Composite Image

Next, with reference to Fig. 22, a structure of the composite image SI generated by performing Steps S31 to S34 described above is described. Fig. 22 is a diagram illustrating an example of the composite image.

The composite image SI displays a plurality of objects O indicating facilities in the automatic warehouse system 1. Specifically, a plurality of types of the automatic warehouses 11 included in the automatic warehouse system 1 are displayed as the objects O.

In addition, in the composite image SI, the icon is attached to each of the objects O. In the example of the composite image SI illustrated in Fig. 22, seven types of icons (ICO1 to ICO7) are attached. It should be noted that types of the icons displayed in the composite image SI can be arbitrarily determined depending on a type of the information associated with the facility, or the like.

The first icon ICO1 has a shape of circled character "i". The first icon ICO1 shows that the facility at which this icon is attached is associated with the operation information FI and/or the maintenance information MI that are various information about this facility (such as a manual).

In addition, a character string "^{∗∗∗} INFO" ("^{∗∗∗}" is a designation of facility, the same is true below) is attached below the first icon ICO1, so that the object at which the first icon ICO1 is attached is specifically indicated.

The second icon ICO2 has a shape of a small camera. The second icon ICO2 shows that the facility at which this icon is attached is associated with the operation information FI that is image data acquired by the camera CA installed at this facility.

In addition, a character string "^{∗∗∗} camera" is attached below the second icon ICO2, so that the object at which the second icon ICO2 is attached is specifically indicated.

The third icon ICO3 has a shape of a thermometer and a hygrometer. The third icon ICO3 shows that the facility at which this icon is attached is associated with the operation information FI that is data (temperature, humidity) acquired by the sensor SE installed at this facility.

In addition, a character string "^{∗∗∗} humidity/temperature" is attached below the third icon ICO3, so that the object at which the third icon ICO3 is disposed is specifically indicated.

The fourth icon ICO4 has a shape of a document. The fourth icon ICO4 shows that the facility at which this icon is attached is associated with the maintenance information MI that is the parts list of this facility.

In addition, a character string "^{∗∗∗} parts list" is attached below the fourth icon ICO4, so that the object at which the fourth icon ICO4 is attached is specifically indicated.

The fifth icon ICO5 has a shape of a large camera. The fifth icon ICO5 shows that the large camera at which this icon is attached is associated with the operation information FI that is image data acquired by the large camera with this icon.

In addition, a character string "camera" is attached below the fifth icon ICO5, so as to indicate that the fifth icon ICO5 is attached at the object of the large camera.

The sixth icon ICO6 has a shape of an inverted triangle with an arrow beside it. The sixth icon ICO6 is attached at a predetermined position in the workplace image FM (the composite image SI), and shows that, when this icon is clicked, view field of the composite image SI is moved in the direction of the arrow attached to the icon.

When the sixth icon ICO6 is pressed or operated, the center of the view field of the composite image SI becomes the position of the selected sixth icon ICO6, and the direction of the view field becomes the front direction of the sixth icon ICO6.

In this way, in the composite image SI, the maintenance server 3 can perform a virtual reality as if the user moved in the automatic warehouse system 1.

The seventh icon ICO7 is attached at a predetermined position in the workplace image FM (the composite image SI) (in the upper part in the composite image SI in the example of Fig. 16), and has a shape of a switch. In addition, a character string "View Mode" is attached below it. The seventh icon ICO7 has a function to switch between display and non-display of the first icon ICO1 to the sixth icon ICO6 when being clicked.

### (9-3) Display Screen of Composite Image and Chat Box

With reference to Fig. 23, a structure of the display screen 13 on which the composite image SI and the chat box A4 are simultaneously displayed is described hereinafter. Fig. 23 is a diagram illustrating an example of the display screen on which the composite image and the chat box are simultaneously displayed.

As illustrated in Fig. 23, in the display screen 13, the room selection box A2 and the chat box A4 described above are displayed outside the area in which the composite image SI is displayed. In the example illustrated in Fig. 23, the room selection box A2 is displayed on the left side of the composite image SI, and the chat box A4 is displayed on the right side of the same.

In the chat box A4, chat contents of the current chat performed at predetermined timings are displayed as balloons CH in time series.

In addition, a file selection box FS is disposed in the chat box A4. The file selection box FS has a function to select a file stored in the operator terminal 17, the maintenance terminal 21a, or the like, and to attach the file to the chat content (balloon CH).

The file attached to the chat content in this way can be dragged to the composite image SI and associated as the operation information FI or the maintenance information MI with a predetermined position or an object O in the composite image SI.

For instance, the file associated from the chat content can be associated as the operation information FI when the above-mentioned operation is performed on the operator terminal 17, while it can be associated as the maintenance information MI when the above-mentioned operation is performed on the maintenance terminal 21a, 21b.

### (9-4) Selection Screen

With reference to Figs. 24 and 25, a structure of the selection screen 14 that displays a list of information associated to the object O is described hereinafter. Fig. 24 is a diagram illustrating an example of the selection screen that displays a character string list. Fig. 25 is a diagram illustrating an example of the selection screen that displays a thumbnail list.

The selection screen 14 illustrated in Fig. 24 has the character string list display box L2. The character string list display box L2 displays a list in which the information associated with the object O is sectioned one by one, and a name (file name) of each information is displayed as a character string.

On the other hand, the selection screen 14 illustrated in Fig. 25 has a thumbnail list display box TN. The thumbnail list display box TN displays each information as a thumbnail, and displays a list of thumbnails (thumbnail list) of information associated with the object O.

In addition, the selection screen 14 has a display switch button B6 and an information type switch button B7.

The display switch button B6 is a button for switching between display of the character string list display box L2 illustrated in Fig. 24 and display of the thumbnail list display box TN illustrated in Fig. 25, on the selection screen 14.

The information type switch button B7 is a button for switching the type of information (e.g. the operation information FI or the maintenance information MI) to be displayed in the character string list display box L2 or the thumbnail list display box TN.

Further, the keyword input box T5 is disposed on the selection screen 14 illustrated in Fig. 24. The keyword input box T5 is used when the operator (or the maintainer) inputs the search word for the character string search of the list in the character string list display box L2.

### 2. Other Embodiments

Although one embodiment of the present invention is described above, the present invention is not limited to this embodiment but can be variously modified within the scope of the invention without deviating from the spirit thereof. In particular, a plurality of embodiments and variations described in this specification can be arbitrarily combined as necessary.

The order of the processes in the flowchart described above, and the way to perform process of the steps can be modified within the scope of the invention without deviating from the spirit thereof.

(A) The composite image SI may not have the icon showing that the object O is associated with the operation information FI and the maintenance information MI.

In this case, for example, it may be possible to adopt a structure in which when a display area of the object O in the workplace image FM is clicked, the operation information FI and the maintenance information MI associated with the object O (a list thereof) are displayed.

Other than that, for example, when a cursor (e.g. a mouse cursor) is placed on the composite image SI, if the operation information FI and the maintenance information MI are associated with the cursor position, the shape of the cursor can be changed.

(B) For instance, the operation to log in to the maintenance server 3 using the user ID and the password may not be performed in the case where there is no access restriction for each user to the information provided to the operator terminal 17 and the maintenance terminal 21a, 21b, or in other case.

In this case, the composite image SI can be generated by associating all the operation information FI and the maintenance information MI accumulated in the maintenance server 3 with the corresponding object O. In this case, it is also possible to organize all the operation information FI and the maintenance information MI for each associated object O using the composite image SI.

Other than that, instead of the user ID and the password, biological information of the operator and the maintainer (such as a fingerprint, a blood vessel (vein) pattern, an iris pattern, or a facial pattern) can be used for the user authentication.

Further, for example, identification information of the operator terminal 17 and the maintenance terminal 21a, 21b (such as a MAC address or an IP address) can be used for the user authentication. In this case, the access permission can be set for each operator terminal 17, each maintenance terminal 21a, 21b, each LAN group, each automatic warehouse system 1, each maintenance base 2, or the like.

(C) The communication system 100 described above can be used not only in the case where information is shared between the automatic warehouse system 1 and the maintenance base 2 for maintaining facilities in the automatic warehouse system 1, but also in other system in which information is shared between sites apart from each other.

(D) The chat box A4 may be displayed in a state overlapping a part of the composite image SI. In this case, the chat box A4 and/or the composite image SI may be movable within the screen.

### INDUSTRIAL APPLICABILITY

The present invention can be widely applied to systems in which information about facilities in a workplace in particular is shared among a plurality of users.

### REFERENCE SIGNS LIST

- 100: communication system
- 1: automatic warehouse system
- 11: automatic warehouse
- 13a: first external storage device
- 13b: second external storage device
- 15a: conveyance management server
- 15b: information management server
- 17: operator terminal
- 19: first gateway device
- CA: camera
- CA1 to CA4: camera
- SE: sensor
- SH1: first switching hub
- SH2: second switching hub
- SH3: third switching hub
- 2: maintenance base
- 21a, 21b: maintenance terminal
- 23: second gateway device
- 3: maintenance server
- 31: processor
- 32: RAM
- 33: ROM
- 34: network interface
- 35: storage device
- 36: display
- 37: input interface
- NW: network
- A1: use history display box
- A2: room selection box
- A3: user information change box
- A4: chat box
- AI: association information
- B1: login button
- B2: update button
- B3: selection button
- B4: image change button
- B5: update button
- B6: display switch button
- B7: information type switch button
- CH: balloon
- DR1, DR2: graphic
- DR3: character string
- FI: operation information
- FM: workplace image
- FS: file selection box
- I1: login screen
- 12: initial screen
- 13: screen
- 14: selection screen
- 15: screen
- ICO1: first icon
- ICO2: second icon
- ICO3: third icon
- ICO4: fourth icon
- ICO5: fifth icon
- ICO6: sixth icon
- ICO7: seventh icon
- L1: use history list
- L2: character string list display box
- LI: access permission information
- M1: type change box
- MI: maintenance information
- O: object
- PU: popup window
- SI: composite image
- T1: user ID input box
- T2: password input box
- T3: memo box
- T4: information edit box
- T5: keyword input box
- TN: thumbnail list display box
- UI: user information

## Claims

1. A maintenance method executed by a maintenance server for maintaining a facility at a workplace, the method comprising:
generating a workplace image showing the workplace;
receiving operation information about the facility from the workplace;
receiving maintenance information for maintaining the facility from a maintenance base outside the workplace, the maintenance information being managed at the maintenance base;
generating a composite image by associating an object indicating the facility in the workplace image with the operation information and/or the maintenance information about the facility; and
outputting the composite image to an operator terminal used by an operator using the facility at the workplace, and to a maintenance terminal used by a maintainer maintaining the facility at the maintenance base.

2. The maintenance method according to claim 1, further comprising:
receiving authentication information from the maintenance terminal and the operator terminal; and
performing an authentication process of the maintenance terminal and the operator terminal by using the received authentication information,
wherein the composite image is outputted to the maintenance terminal and the operator terminal that have been successfully authenticated as a result of the authentication process.

3. The maintenance method according to claim 2, wherein the authentication information includes a user ID for identifying the operator or the maintainer,
generating the composite image includes generating a composite image with an access permission by associating the object with only operation information and/or maintenance information that is allowed to be accessed by the operator or the maintainer who is identified with the user ID, and
outputting the composite image includes outputting the composite image with the access permission to the operator terminal used by the operator having the user ID used in generating the composite image with the access permission, or to the maintenance terminal used by the maintainer having the user ID used in generating the composite image with the access permission.

4. The maintenance method according to any one of claims 1 to 3, wherein
the composite image has one or more icons showing that the operation information and/or the maintenance information are associated with the object, and
the method further comprises, when it is determined that a specific icon is selected among the one or more icons in the composite image, outputting the operation information and/or the maintenance information associated with the specific icon, to the operator terminal or the maintenance terminal that has performed a selection of the specific icon.

5. The maintenance method according to any one of claims 1 to 4, further comprising:
outputting a list representing, in a form of character strings, the operation information and/or the maintenance information associated with the object in the composite image to the maintenance terminal and the operator terminal; and
performing a character string search of the list.

6. The maintenance method according to any one of claims 1 to 5, further comprising displaying a chat box for providing a chat function using the operator terminal and the maintenance terminal together with the composite image,
wherein generating the composite image includes generating the composite image by associating the workplace image with a content of the chat performed using the chat box.

7. The maintenance method according to claim 6, further comprising generating a link to access to a predetermined position in the composite image by designating the content of the chat associated with the workplace image.

8. The maintenance method according to any one of claims 1 to 7, wherein the operation information includes information generated in the facility, and the maintenance information includes information generated by the maintenance terminal.

9. The maintenance method according to any one of claims 1 to 8, further comprising:
when receiving new operation information and/or maintenance information after the composite image is provided, generating a new composite image by associating received new information with a corresponding object in the composite image; and
outputting the new composite image to the operator terminal and the maintenance terminal.

10. The maintenance method according to claim 9, further comprising, when the new composite image is generated, notifying the operator terminal and the maintenance terminal that the composite image is updated.

11. A maintenance server for maintaining a facility at a workplace, the server comprising a control unit configured to:
generate a workplace image showing a workplace;
receive operation information about the facility from the workplace;
receive maintenance information from a maintenance base outside the workplace, the maintenance information being for maintaining the facility managed at the maintenance base;
generate a composite image by associating an object indicating the facility in the workplace image with the operation information and/or the maintenance information about the facility; and
output the composite image to an operator terminal used by an operator who uses the facility at the workplace, and to a maintenance terminal used by a maintainer who maintains the facility at the maintenance base.

12. The maintenance server according to claim 11, wherein the control unit is configured to receive authentication information from the maintenance terminal and the operator terminal, performs an authentication process of the maintenance terminal and the operator terminal by using the received authentication information, and output the composite image to the maintenance terminal and the operator terminal that has been successfully authenticated as a result of the authentication process.

13. The maintenance server according to claim 12, wherein
the authentication information includes a user ID for identifying the operator and the maintainer,
the control unit is configured to generate a composite image with an access permission by associating the object with only the operation information and/or the maintenance information that is allowed to be viewed by the operator or the maintainer identified by the user ID, and
the control unit is configured to output the composite image with the access permission to the operator terminal used by the operator having the user ID used in generating the composite image with the access permission, or to the maintenance terminal used by the maintainer having the user ID.

14. The maintenance server according to any one of claims 11 to 13, wherein
the composite image has one or more icons showing that the operation information and/or the maintenance information are associated with the object, and
when determining that a specific icon is selected among the one or more icons in the composite image, the control unit is configured to output the operation information and/or the maintenance information associated with the specific icon to the operator terminal or the maintenance terminal that has performed a selection of the specific icon.

15. The maintenance server according to any one of claims 11 to 14, wherein the control unit is configured to output a list representing, in a form of character strings, the operation information and/or the maintenance information associated with the object in the composite image to the maintenance terminal and the operator terminal, and perform a character string search of the list.

16. The maintenance server according to any one of claims 11 to 15, wherein the control unit is configured to display a chat box for providing a chat function using the operator terminal and the maintenance terminal together with the composite image, and generate the composite image by associating the workplace image with a content of the chat performed using the chat box.

17. The maintenance server according to claim 16, wherein the control unit is configured to generate a link to access to a predetermined position in the composite image by designating the content of the chat associated with the workplace image.

18. The maintenance server according to any one of claims 11 to 17, wherein the operation information includes information generated by the operator terminal, and the maintenance information includes information generated by the maintenance terminal.

19. The maintenance server according to any one of claims 11 to 18, wherein, when receiving new operation information and/or maintenance information after the composite image is provided, the control unit is configured to generate a new composite image by associating received new information with a corresponding object in the composite image, and output the new composite image to the operator terminal and the maintenance terminal.

20. The maintenance server according to claim 19, wherein, when generating the new composite image, the control unit is configured to notify the operator terminal and the maintenance terminal that the composite image is updated.

21. A program that causes a computer to execute the maintenance method according to any one of claims 1 to 10.
